(19) **Europäisches Patentamt / European Patent Office / Office européen des brevets**

(11) **EP 3 379 303 A1**

(12) # EUROPEAN PATENT APPLICATION
published in accordance with Art. 153(4) EPC

(43) Date of publication:
**26.09.2018 Bulletin 2018/39**

(21) Application number: **16866332.6**

(22) Date of filing: **16.11.2016**

(51) Int Cl.:
**G02B 5/02** (2006.01)  **E06B 3/66** (2006.01)
**E06B 5/00** (2006.01)  **E06B 9/26** (2006.01)
**F21S 11/00** (2006.01)  **G02B 5/00** (2006.01)

(86) International application number:
**PCT/JP2016/083900**

(87) International publication number:
**WO 2017/086331 (26.05.2017 Gazette 2017/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.11.2015 JP 2015225170**

(71) Applicant: **Sharp Kabushiki Kaisha**
**Sakai City, Osaka 590-8522 (JP)**

(72) Inventors:
• **SHINOZAKI, Daisuke**
**Osaka 590-8522 (JP)**

• **KANNO, Toru**
**Osaka 590-8522 (JP)**
• **KAMADA, Tsuyoshi**
**Osaka 590-8522 (JP)**
• **NISHINAKA, Shumpei**
**Osaka 590-8522 (JP)**
• **UEKI, Shun**
**Osaka 590-8522 (JP)**

(74) Representative: **Müller Hoffmann & Partner Patentanwälte mbB**
**St.-Martin-Strasse 58**
**81541 München (DE)**

(54) **LIGHTING DEVICE, LIGHTING SYSTEM, AND METHOD FOR MANUFACTURING LIGHTING DEVICE**

(57) A daylighting device including: a transparent base material; a plurality of daylighting sections disposed on a first face of the base material; and gap portions provided between the daylighting sections, wherein: the daylighting device has daylighting areas in which light is transmitted through the daylighting sections and light-transmitting areas in which light is transmitted through the base material without passing through the daylighting sections; and the daylighting areas and the light-transmitting areas are arranged so as to alternate in at least one direction in a plane of the first face.

FIG. 1

EP 3 379 303 A1

**Description**

Technical Field

The present invention, in some aspects thereof, relates to daylighting devices, daylighting systems, and methods of manufacturing daylighting devices.

The present application claims priority to Japanese Patent Application, Tokugan, No. 2015-225170 filed in Japan on November 17, 2015, which is incorporated herein by reference in its entirety.

Background Art

Daylighting devices containing a daylighting film have been conventionally installed over a face of a window pane to efficiently guide indoors outdoor light such as sunlight incident on the window pane (see, for example, Patent Literature 1).

Citation List

Patent Literature

Patent Literature 1: Japanese Unexamined Patent Application Publication, Tokukai, No. 2013-156554

Summary of Invention

Technical Problem

These daylighting devices include a plurality of prisms on a surface thereof to direct light indoors. A person inside the room therefore cannot see and recognize the outside scenery through the window. Conventional daylighting devices offer poor see-through visibility to the room's occupants.

The present invention, in one aspect thereof, has been made in view of these conventional problems. One of the objects of that aspect of the invention is to provide a daylighting device that enables a person inside the room to see the outside scenery through the window.

Solution to Problem

The present invention, in one aspect thereof, may be directed to a daylighting device including: a transparent base material; a plurality of daylighting sections disposed on a first face of the base material; and gap portions provided between the daylighting sections, wherein: the daylighting device has daylighting areas in which light is transmitted through the daylighting sections and light-transmitting areas in which light is transmitted through the base material without passing through the daylighting sections; and the daylighting areas and the light-transmitting areas are arranged so as to alternate in at least one direction in a plane of the first face.

In the above-described daylighting device, the daylighting areas and the light-transmitting areas may be arranged like alternating stripes when viewed normal to the base material.

In the above-described daylighting device, the daylighting areas and the light-transmitting areas may be arranged in a checkerboard pattern when viewed normal to the base material.

In the above-described daylighting device, the daylighting areas and the light-transmitting areas may be arranged in a non-periodic fashion in a single direction in the plane of the first face when viewed normal to the base material.

In the above-described daylighting device, the light-transmitting areas may have a lower light transmittance than do the daylighting areas.

The above-described daylighting device may further include a transparent protection plate disposed on the first face of the base material, wherein the protection plate is fixed to the base material in the light-transmitting areas.

In the above-described daylighting device, the base material may have a smaller total thickness in portions thereof where the light-transmitting areas are formed than in portions thereof where the daylighting areas are formed.

In the above-described daylighting device, those daylighting sections in a first one of the daylighting areas may extend linearly in a first direction in the plane of the first face; and those daylighting sections in a second one of the daylighting areas may extend linearly in a second direction in the plane of the first face, the second daylighting area being a different daylighting area from the first daylighting area, the second direction being different from the first direction.

The above-described daylighting device may further include a light-diffusion section configured to diffuse either light exiting the daylighting sections or light entering the daylighting sections.

In the above-described daylighting device, the light-diffusion section may form a light-diffusion area; and the light-diffusion area may include the daylighting areas and is larger than the daylighting areas when viewed normal to the base material.

The above-described daylighting device may further include a pair of transparent plates, wherein the base material is disposed between the pair of transparent plates.

The present invention, in one aspect thereof, may be directed to a daylighting device including: a plurality of strip-shaped daylighting slats each including a transparent base material, a plurality of daylighting sections disposed on a first face of the base material, and gap portions provided between the daylighting sections; and a plurality of light-transmitting, strip-shaped transparent slats, wherein the daylighting slats and the transparent slats are suspended such that a group of at least one of the daylighting slats and a group of at least one of the transparent slats alternate vertically and that the daylighting slats and the transparent slats each have a length thereof in a horizontal direction.

The present invention, in one aspect thereof, may be directed to a daylighting device including a plurality of strip-shaped daylighting slats each including: a transparent base material; a plurality of daylighting sections disposed on a first face of the base material; and gap portions provided between the daylighting sections, wherein the daylighting slats are suspended one above each other at a vertical pitch greater than a vertical width of the daylighting slats, so as to each have a length thereof in a horizontal direction.

The present invention, in one aspect thereof, is directed to a daylighting system including: one of the above-described daylighting devices; an interior lighting fixture; a detection unit configured to detect indoor brightness; and a control unit configured to control the interior lighting fixture and the detection unit.

The present invention, in one aspect thereof, is directed to a method of manufacturing a daylighting device, the method including: providing a plurality of daylighting sections and gap portions on a first face of a light-transmitting plate material, the gap portions being located between the daylighting sections; and filling some of the gap portions with a resin material to form light-transmitting areas, wherein the light-transmitting areas and daylighting areas constituted by the daylighting sections, not filled with the resin material, are arranged so as to alternate in at least one direction in a plane of the first face.

The present invention, in one aspect thereof, is directed to a method of manufacturing a daylighting device, the method including: forming a daylighting film including a plurality of daylighting sections and gap portions between the daylighting sections; and attaching the daylighting film to a first face of a transparent base material, wherein: the first face has daylighting areas where the daylighting film is attached and light-transmitting areas where the daylighting film is not attached; and the daylighting areas and the light-transmitting areas are arranged so as to alternate in at least one direction in a plane of the first face.

The present invention, in one aspect thereof, is directed to a method of manufacturing a daylighting device, the method including forming daylighting areas and light-transmitting areas on a base material made of a transparent plate material using a mold having irregular regions and flat regions, the daylighting areas corresponding to the irregular regions, the light-transmitting areas corresponding to the flat regions, wherein the daylighting areas and the light-transmitting areas are arranged so as to alternate in at least one direction in a plane of a first face of the base material.

Advantageous Effects of Invention

The present invention, in one aspect thereof, may provide a daylighting device that enables a person inside a room to see the outside scenery through the window.

Brief Description of Drawings

FIG. 1 is an illustration of an overall structure of a daylighting device in accordance with a first embodiment.
FIG. 2A is a vertical cross-sectional view of the entire daylighting device in accordance with the first embodiment.
FIG. 2B is a vertical cross-sectional view of the daylighting device in accordance with the first embodiment, showing a part of FIG. 2A in an enlarged manner.
FIG. 3 is a schematic illustration showing the relative positions of a person in a room and the daylighting device in accordance with the first embodiment.
FIG. 4 is a cross-sectional view of daylighting sections, illustrating an internal light-controlling function of the daylighting sections.
FIG. 5A is a first cross-sectional view of a variation example of the daylighting section.
FIG. 5B is a second cross-sectional view of a variation example of the daylighting section.
FIG. 5C is a third cross-sectional view of a variation example of the daylighting section.
FIG. 5D is a fourth cross-sectional view of a variation example of the daylighting section.

FIG. 6A is a cross-sectional view of daylighting sections disposed facing outdoors and a resultant light path.

FIG. 6B is a cross-sectional view of daylighting sections disposed facing indoors and a resultant light path.

FIG. 7 is a schematic diagram illustrating an example method of manufacturing a resin sheet in a method of manufacturing the daylighting device in accordance with the first embodiment.

FIG. 8A is a first schematic view illustrating an example method of manufacturing a resin sheet in a method of manufacturing the daylighting device in accordance with the first embodiment.

FIG. 8B is a second schematic view illustrating an example method of manufacturing a resin sheet in a method of manufacturing the daylighting device in accordance with the first embodiment.

FIG. 8C is a third schematic view illustrating an example method of manufacturing a resin sheet in a method of manufacturing the daylighting device in accordance with the first embodiment.

FIG. 9A is a schematic view illustrating a first method of manufacturing the daylighting device in accordance with the first embodiment, before a resin sheet is cut.

FIG. 9B is a schematic view illustrating the first method of manufacturing the daylighting device in accordance with the first embodiment, where a daylighting member has been formed by cutting a resin sheet.

FIG. 9C is a schematic view illustrating the first method of manufacturing the daylighting device in accordance with the first embodiment, where a daylighting member is to be attached to a base material.

FIG. 10A is a schematic view illustrating a second method of manufacturing the daylighting device in accordance with the first embodiment, where daylighting sections have been provided on an entire base material.

FIG. 10B is a schematic view illustrating the second method of manufacturing the daylighting device in accordance with the first embodiment, where an uncured resin material is dispensed between the daylighting sections.

FIG. 10C is a schematic view illustrating the second method of manufacturing the daylighting device in accordance with the first embodiment, where the resin material has been cured to fill gap portions.

FIG. 11A is a schematic view illustrating a third method of manufacturing the daylighting device in accordance with the first embodiment, where an uncured resin layer is formed on a base material.

FIG. 11B is a schematic view illustrating the third method of manufacturing the daylighting device in accordance with the first embodiment, where a mold is pressed onto the resin layer.

FIG. 11C is a schematic view illustrating the third method of manufacturing the daylighting device in accordance with the first embodiment, after the mold is separated.

FIG. 12A is a schematic view illustrating a variation example of the third method of manufacturing the daylighting device in accordance with the first embodiment, where an uncured resin layer is formed on a base material.

FIG. 12B is a schematic view illustrating the variation example of the third method of manufacturing the day lighting device in accordance with the first embodiment, where a mold is pressed onto the resin layer.

FIG. 12C is a schematic view illustrating the variation example of the third method of manufacturing the day lighting device in accordance with the first embodiment, after the mold is separated.

FIG. 13 is an illustration of an overall structure of a daylighting device in accordance with Variation Example 1 of the first embodiment.

FIG. 14 is an illustration of an overall structure of a daylighting device in accordance with Variation Example 2 of the first embodiment.

FIG. 15 is an illustration of an overall structure of a daylighting device in accordance with Variation Example 3 of the first embodiment.

FIG. 16 is an illustration of an overall structure of a daylighting device in accordance with Variation Example 4 of the first embodiment.

FIG. 17 is an illustration of an overall structure of a daylighting device in accordance with Variation Example 5 of the first embodiment.

FIG. 18 is an illustration of an overall structure of a daylighting device in accordance with Variation Example 6 of the first embodiment.

FIG. 19 is an illustration of an overall structure of a daylighting device in accordance with Variation Example 7 of the first embodiment.

FIG. 20 is a cross-sectional view, taken along line XX-XX in FIG. 19, of the daylighting device in accordance with Variation Example 7 of the first embodiment.

FIG. 21 is a vertical cross-sectional view of a daylighting device in accordance with a second embodiment.

FIG. 22 is a vertical cross-sectional view of a daylighting device in accordance with a third embodiment.

FIG. 23 is a vertical cross-sectional view of a daylighting device in accordance with a variation example of the third embodiment.

FIG. 24 is a vertical cross-sectional view of a daylighting device in accordance with a fourth embodiment.

FIG. 25 is a vertical cross-sectional view of a daylighting device in accordance with a variation example of the fourth embodiment.

FIG. 26 is an illustration of an overall structure of a daylighting device in accordance with a fifth embodiment.

FIG. 27 is an illustration of an overall structure of a daylighting device in accordance with a sixth embodiment.

FIG. 28 is a vertical cross-sectional view of the daylighting device in accordance with the sixth embodiment.

FIG. 29 is a perspective view of an example light-diffusion section.

FIG. 30 is a perspective view of an example light-diffusion section.

FIG. 31 is a perspective view of an example light-diffusion section.

FIG. 32 is a perspective view of an example light-diffusion section.

FIG. 33 is a perspective view of an example light-diffusion section.

FIG. 34 is an enlarged cross-sectional view of the sixth embodiment, showing the relative positions of daylighting sections and a light-diffusion section in detail.

FIG. 35 is a vertical cross-sectional view of a daylighting device in accordance with a seventh embodiment.

FIG. 36 is a vertical cross-sectional view of a daylighting device in accordance with an eighth embodiment.

FIG. 37 is a vertical cross-sectional view of a variation example of a daylighting device with a light-diffusion section.

FIG. 38 is a vertical cross-sectional view of a variation example of a daylighting device with a light-diffusion section.

FIG. 39 is a vertical cross-sectional view of a variation example of a daylighting device with a light-diffusion section.

FIG. 40 is a vertical cross-sectional view of a variation example of a daylighting device with a light-diffusion section.

FIG. 41 is a vertical cross-sectional view of a variation example of a daylighting device with a light-diffusion section.

FIG. 42 is a vertical cross-sectional view of a variation example of a daylighting device with a light-diffusion section.

FIG. 43 is an illustration of an overall structure of a daylighting device in accordance with a ninth embodiment.

FIG. 44 is an illustration of an overall structure of a daylighting device in accordance with a tenth embodiment.

FIG. 45 is an illustration of an overall structure of a daylighting device in accordance with an eleventh embodiment.

FIG. 46 is an illustration of an overall structure of a daylighting device in accordance with a twelfth embodiment.

FIG. 47 is a vertical cross-sectional view of a daylighting device in accordance with a thirteenth embodiment.

FIG. 48 is a cross-sectional view, taken along line J-J' in FIG. 49, of a room model in which a daylighting device and a lighting-modulation system are installed.

FIG. 49 is a plan view of a ceiling of the room model.

FIG. 50 is a graph representing a relationship between the illuminance produced by daylighting light (natural light) guided indoors by a daylighting device and the illuminance produced by room lighting devices (lighting-modulation system).

Description of Embodiments

The following will describe embodiments of the present invention in reference to drawings. In the drawings used in the following description, members are drawn to suitable arbitrary scales to show each member with readily recognizable dimensions.

First Embodiment

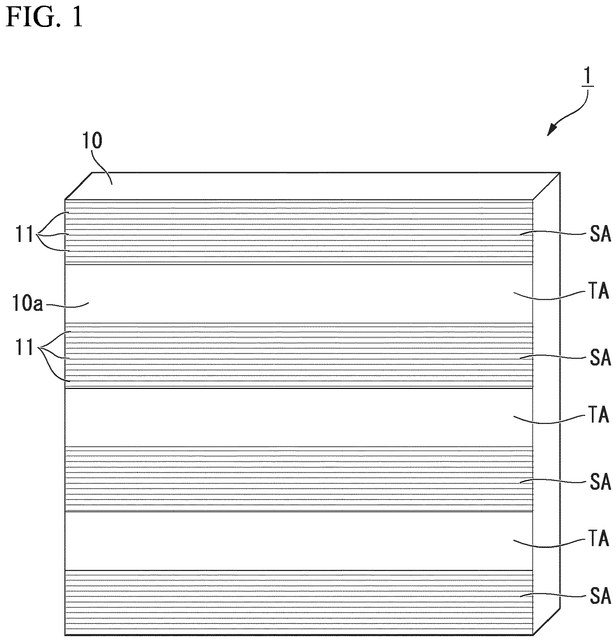

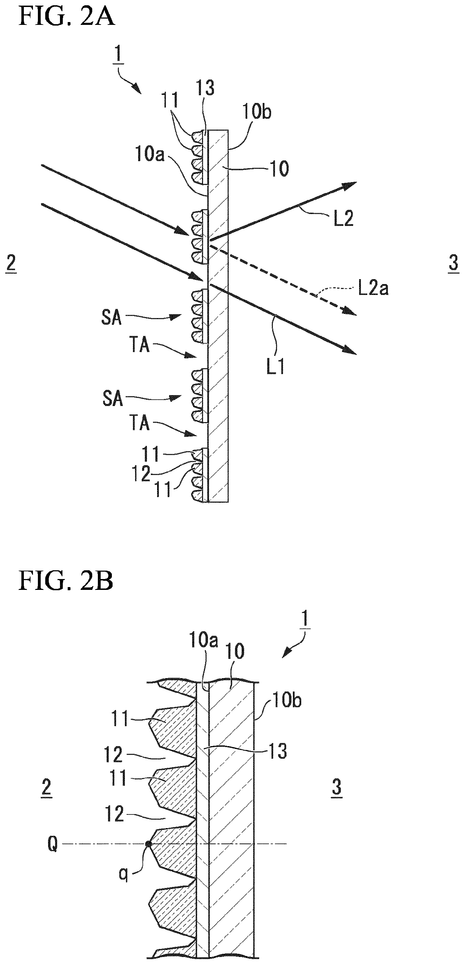

FIG. 1 is an illustration of an overall structure of a daylighting device 1 in accordance with a first embodiment. FIG. 2A is a vertical cross-sectional view of the daylighting device 1. FIG. 2B shows a part of FIG. 2A in an enlarged manner.

The daylighting device 1 in accordance with the present embodiment is an example of a daylighting device that guides sunlight (outdoor light) indoors when attached to a window. The daylighting device 1 includes a light-transmitting, platelike base material 10, a plurality of daylighting sections 11, gap portions 12, and a support base material 13. The daylighting sections 11 are disposed on a first face 10a of the base material 10. The gap portions 12 are provided between the daylighting sections 11. The support base material 13 is positioned between the base material 10 and the daylighting sections 11.

The first face 10a of the base material 10 faces a room's exterior 2 in the present embodiment. The base material 10 has a second face 10b facing the room's interior 3, opposite the first face 10a.

The base material 10 of the present embodiment is, for example, a transparent base material made of, for example, a resin such as a thermoplastic polymer, a thermosetting resin, or a photopolymerizable resin. Examples of the transparent base material include acrylic-based polymers, olefin-based polymers, vinyl-based polymers, cellulose-based polymers, amide-based polymers, fluorine-based polymers, urethane-based polymers, silicone-based polymers, and imide-based polymers. More specific, preferred examples include light-transmitting plates made of triacetyl cellulose (TAC), polyethylene terephthalate (PET), cycloolefin polymer (COP), polycarbonate (PC), polyethylene naphthalate (PEN), polyether sulfone (PES), and polyimide (PI). The base material 10 may alternatively be made of glass. The base material 10 may have any thickness and may have a multilayer structure including a stack of materials.

The base material 10 preferably has a total light transmittance of 90% or higher when measured as specified in JIS K7361-1, which may give sufficient transparency.

Referring to FIG. 2B, the daylighting sections 11 are tiny protrusions on the order of a few tens of micrometers to a few hundreds of micrometers provided on the first face 10a of the base material 10 to guide outdoor light (sunlight) into the interior 3. The daylighting sections 11 are arranged in stripes. The daylighting sections 11 are disposed one above each other (parallel to each other) in the vertical direction so as to extend horizontally. Each daylighting section 11 has a polygonal shape in the cross-section taken perpendicular to the length thereof.

The daylighting sections 11 are fixed to the first face 10a of the base material 10 with the support base material 13 intervening therebetween. The support base material 13 transmits light. The present embodiment describes an example where the daylighting sections 11 are fixed to the base material 10 with the support base material 13 intervening therebetween. This structure is however by no means meant to limit the present invention. Alternatively, the daylighting sections 11 may be disposed directly on one of the faces (first face 10a) of the base material 10.

Each daylighting section 11 of the present embodiment is a polygonal-prism structural body with a hexagonal cross-section and is asymmetric with respect to line Q that passes through an apex q, a point on the daylighting section 11 removed farthest from the base material 10, and that is perpendicular to the base material 10. The cross-section of the daylighting section 11 has a smaller-than-180° interior angle at five out of the six vertices thereof.

The cross-sectional shape of the daylighting section 11 is by no means limited to the one illustrated in the drawings and may be designed suitably to have a different shape depending on the intended use and other requirements on the daylighting device 1. In other words, the daylighting section 11 may, for example, be triangular or have a curved line in the cross-section taken perpendicular to the length thereof, provided that the shape of the daylighting section 11 confers a daylighting function.

The gap portions 12, provided between adjacent daylighting sections 11, contain air therein and therefore have a refractive index of approximately 1.0. Specifying the refractive index of the gap portions 12 to be 1.0 minimizes the critical angles of the interfaces of the gap portions 12 and the daylighting sections 11. The base material 10 and the daylighting sections 11 preferably have approximately equal refractive indices for the following reasons. If there is a large difference between the refractive index of the base material 10 and the refractive index of the daylighting sections 11, the light entering the daylighting sections 11 from the base material 10 may undesirably be refracted or reflected at the interface of the daylighting sections 11 and the base material 10. These phenomena could lead to unfavorable results, including reduced luminance and a failure to achieve a desirable daylighting ability. Specifying the refractive index of the base material 10 and the refractive index of the daylighting sections 11 to have approximately equal values achieves a desirable daylighting ability, improves light use efficiency, and reduces uncomfortable reflection of light into the room interior 3.

The daylighting sections 11 are made of a light-transmitting and photosensitive organic material such as an acrylic resin, an epoxy resin, or a silicone resin. These resins may be mixed with, for example, a polymerization initiator, a coupling agent, a monomer, or an organic solvent, to obtain a mixture of transparent resins for use. The polymerization initiator may contain various additional components such as stabilizers, inhibitors, plasticizers, fluorescent whitening agents, release agents, chain transfer agents, and other photopolymerizable monomers. The daylighting sections 11 preferably have a total light transmittance of 90% or higher when measured as specified in JIS K7361-1, which may give sufficient transparency.

The first face 10a of the base material 10 has a plurality of daylighting areas SA and a plurality of light-transmitting areas TA arranged like alternating stripes thereon.

The daylighting areas SA are where the daylighting sections 11 and the gap portions 12 are provided when viewed normal to the base material 10. The light traveling from the exterior 2 into the interior 3 through the daylighting areas SA inevitably passes through the daylighting sections 11.

The light-transmitting areas TA are where no daylighting sections 11 are provided on the base material 10. The light passing through the light-transmitting areas TA does not travel through the daylighting sections 11.

Both the daylighting areas SA and the light-transmitting areas TA extend in the horizontal direction like narrow strips when viewed normal to the base material 10, that is, in plan view. The daylighting areas SA and the light-transmitting areas TA are arranged in a vertically alternating fashion to form a stripe pattern. In other words, the daylighting areas SA and the light-transmitting areas TA are arranged in a vertically alternating fashion in the plane of the first face 10a of the base material 10.

The light traveling from the exterior 2 into the interior 3 through the daylighting areas SA is refracted by the daylighting sections 11 and shone, for example, onto the ceiling, rather than onto the floor. Therefore, the person in the room's interior 3 looking at the daylighting device 1 cannot see the scenery in the exterior 2.

Meanwhile, the light-transmitting areas TA have no daylighting sections 11 formed therein. The light entering the light-transmitting areas TA from the exterior 2 is transmitted through the base material 10 to the interior 3, traveling at equal angles before and after the transmission. Therefore, the person in the room's interior 3 looking at the daylighting device 1 can see the scenery in the exterior 2.

The daylighting device 1 in accordance with the present embodiment, having the daylighting areas SA and the light-transmitting areas TA arranged in a vertically alternating fashion, may enable the person in the room to see the scenery in the exterior 2 through the gaps between the daylighting areas SA. To put it differently, the present embodiment may provide the daylighting device 1 which may guarantee see-through visibility where the outside scenery can be seen through the window.

The daylighting areas SA and the light-transmitting areas TA are arranged in an alternating fashion, but not necessarily be so in a vertical direction in the plane of the first face 10a. The daylighting areas SA and the light-transmitting areas TA may only need to be arranged so as to alternate in at least one direction in the plane of the first face 10a. Details will be given later in variation examples and embodiments.

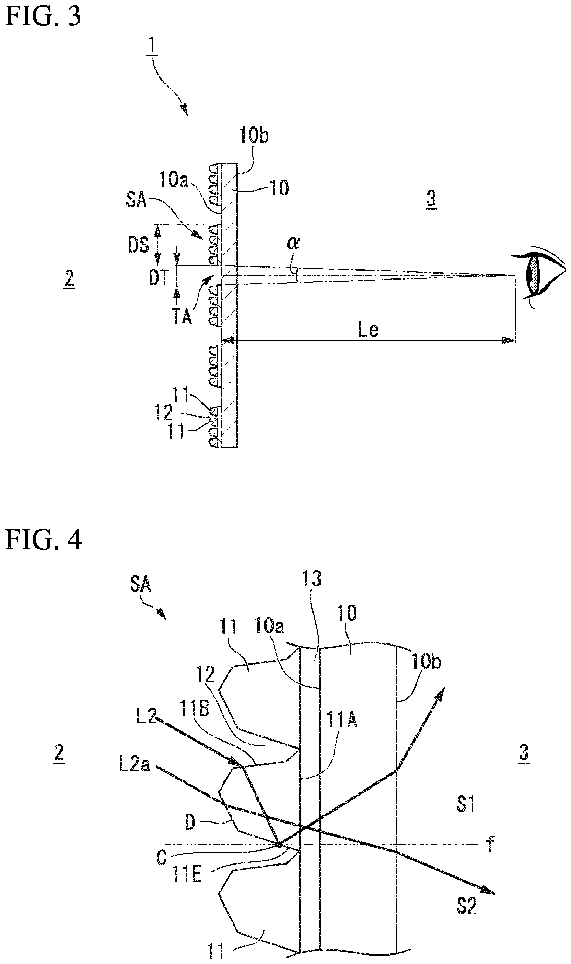

FIG. 3 is an illustration showing the daylighting device 1 and the relative positions of the daylighting device 1 and observer O in the interior 3 of the room where the daylighting device 1 is installed. In FIG. 3, each daylighting area SA and each light-transmitting area TA have respective widths (i.e., vertical dimensions) of DS and DT. Observer O observes the exterior 2 via the daylighting device 1 at a distance Le from the daylighting device 1. Relationship between the see-through visibility of the daylighting device 1 and the widths DS and DT of the daylighting areas SA and the light-transmitting areas TA will be described based on FIG. 3 for separate cases where DT ≥ DS and where DT < DS.

Width DT ≥ Width DS

If the width DT of the light-transmitting areas TA is greater than or equal to the width DS of the daylighting areas SA (if width DT ≥ width DS), observer O can sufficiently see the outdoor scenery regardless of his/her distance Le from the daylighting device 1. To put it differently, if width DT ≥ width DS, the resultant daylighting device 1 may ensure see-through visibility no matter where observer O is positioned in the interior 3.

Note that the width DT of the light-transmitting areas TA being greater than or equal to the width DS of the daylighting areas SA in the present embodiment indicates that the area of the light-transmitting areas TA is greater than or equal to the area of the daylighting areas SA. Even if the light-transmitting areas TA and the daylighting areas SA are not arranged like alternating stripes (as described later in variation examples), the resultant daylighting device 1 may ensure see-through visibility for observer O anywhere in the interior 3 as long as the area of the light-transmitting areas TA is greater than the area of the daylighting areas SA.

Width DT < Width DS

If the width DT of the light-transmitting areas TA is smaller than the width DS of the daylighting areas SA (if width DT < width DS), observer O is given see-through visibility that varies with his/her distance Le from the daylighting device 1. It is generally said that a human being is able to clearly recognize an object that is, around the center of the field of view, as small as an approximate angular range of ±1° (2° both vertically and horizontally). This angular range corresponds to the range of the viewing field from which the central fovea, located at the center of the retina, receives light. Referring to FIG. 3, the angular range α made by the light-transmitting area TA around centerline CL of the field of view increases when observer O moves closer to the daylighting device 1 and decreases when observer O moves away from the daylighting device 1. If the angular range α is less than or equal to 2°, which is the range of the viewing field for the central fovea, observer O can observe the exterior 2 even when width DT < width DS. More specifically, the daylighting device 1 may ensure see-through visibility if the distance Le and the width DT of the light-transmitting areas TA satisfy the condition given by Mathematical Expression 1.

[Math. 1]

$$DT \geqq 2Le \cdot \tan(1°)$$

$$\cdots \text{Ex. 1}$$

According to Mathematical Expression 1, the width DS of the daylighting areas SA may be adjusted in accordance with the distance Le between the daylighting device 1 and the location at which an occupant of the room, or observer O, frequently positions himself/herself in the interior 3 where the daylighting device 1 is installed. As an example, if the daylighting device 1 is installed on an office window, the width DS of the daylighting areas SA may be adjusted in accordance with the distance Le of a desk in the office from the daylighting device 1. Based on Table 1 below, the width DT of the light-transmitting areas may be determined for the distance Le of the daylighting device 1 from the location at which the person in the room frequently positions himself/herself.

[Table 1]

| Le (m) | DT (cm) |
|--------|---------|
| 0.5    | ≥ 1.75  |

(continued)

| Le (m) | DT (cm) |
|--------|---------|
| 1.0 | ≥ 3.49 |
| 2.0 | ≥ 6.98 |
| 3.0 | ≥ 10.47 |
| 4.0 | ≥ 13.96 |
| 5.0 | ≥ 17.46 |

By designing the daylighting device 1 using Mathematical Expression 1 and Table 1 above, the resultant daylighting device 1 may provide the daylighting areas SA that are sufficiently larger than the light-transmitting areas TA for increased daylighting efficiency and may also enable the person in the room to see the scenery in the exterior 2 through the light-transmitting areas TA.

The daylighting device 1 receives sunlight obliquely from above. Now will be described paths of light that is incident on the light-transmitting areas TA and the daylighting areas SA of the daylighting device 1.

Referring to FIG. 2A, light L1, which hits the light-transmitting area TA, enters the daylighting device 1 obliquely from above, passes through the base material 10, and exits obliquely downward into the interior 3.

FIG. 2A shows light L1 taking a linear path inside the base material 10 to the interior 3. In actuality, however, light L1 refracts on both surfaces of the base material 10 in accordance with the refractive index. Because the angle of incidence and the angle of emergence are equal on the base material 10, the angle of light passing through the light-transmitting area TA is the same before and after the passage through the daylighting device 1.

Some rays of light that are incident on the daylighting area SA strike upwardly tilted faces 11B of the daylighting sections 11 ("light L2"), and some strike downwardly tilted faces 11D ("light L2a").

Referring to FIG. 4, in the following description, an incident point C is a point at which a ray of light L2 striking the daylighting section 11 hits a face 11E (reflecting face) of the daylighting section 11. A straight line f is defined as an imaginary straight line that passes through the incident point C and that is perpendicular to the first face 10a of the base material 10. A first space S1 is defined as one of the two spaces bordering in a horizontal plane containing the straight line f that contains the light hitting at the incident point C, whilst a second space S2 is defined as the other one of the two spaces that contains no light hitting at the incident point C.

Light L2, having entered the daylighting section 11 through the upwardly tilted face 11B, undergoes total reflection at the face 11E of the daylighting section 11, then travels obliquely upward, that is, into the first space S1, and exits the daylighting section 11 through a face 11A of the daylighting section 11. After exiting the daylighting section 11, light L2 is transmitted through the base material 10 and exits the base material 10 toward the ceiling of the room's interior 3. The light leaving the daylighting device 1 toward the ceiling is reflected off the ceiling and illuminates the inside of the room, which may fill the need for artificial lighting.

Light L2a, having entered the daylighting section 11 through the downwardly tilted face 11D, travels obliquely downward through the daylighting section 11 and the base material 10, that is, into the second space S2, and exits the base material 10 obliquely downward into the interior 3.

Light L2a, part of the light incident on the daylighting area SA, exits the daylighting device 1 obliquely downward into the interior 3 and could become glare which is uncomfortable to a person M in the interior 3.

Glare can be quantitatively expressed with the luminance, size, and location of the light source or the brightness of the background such as the ceiling surface or wall surface. An indicator for uncomfortable glare is glare index PGSV

Glare index PGSV is given by Mathematical Expression 2 below, where $L_s$, or light source luminance, is the brightness in cd/m$^2$ of a light source as observed by a person in the interior 3, $L_b$, or background luminance, is the brightness in cd/m$^2$ of the surroundings (background) of the light source as observed by the person, and $\omega$ is a solid angle in sr of the light source in the field of view of the person. The value of glare index PGSV increases with increasing uncomfortableness to persons and decreases with decreasing uncomfortableness.

[Math. 2]

$$PGSV = \log \frac{L_s^{3.2} \cdot \omega^{-0.64}}{L_b^{0.61-0.79\log\omega}} - 8.2 \qquad \cdots \text{Ex. 2}$$

On the right side of Mathematical Expression 2, background luminance $L_b$ is a denominator, which indicates that the glare, which is uncomfortable to the person M in the interior 3, can be lowered by increasing background luminance $L_b$ relative to light source luminance $L_s$. The light-transmitting areas TA are provided above and below the daylighting areas SA extending in the horizontal direction like narrow strips in the present embodiment. Therefore, for light L2a which is a glaring light source in the daylighting areas SA, the light-transmitting areas TA provide a background, and the luminance of the light-transmitting areas TA gives background luminance $L_b$. Light L1, passing through the light-transmitting areas TA, travels directly in the direction of the person M and would hence provide sufficient background luminance against the luminance of the daylighting areas SA as a glaring light source. Thus, the provision of the light-transmitting areas TA around the daylighting areas SA can lower the value of glare index PGSV

Shape Variations of Daylighting Sections

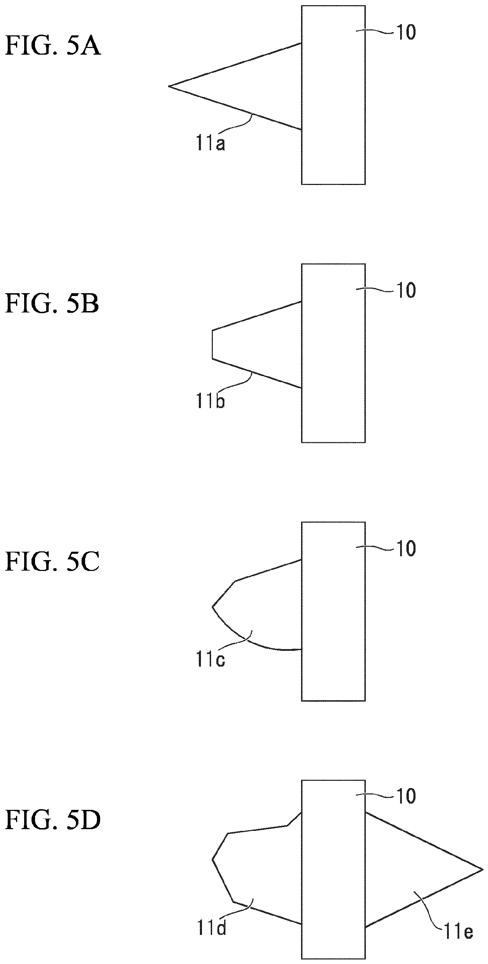

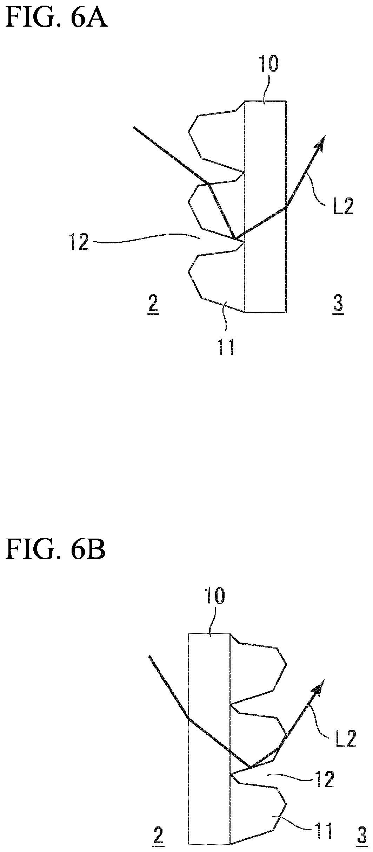

The daylighting section 11 of the present embodiment is hexagonal in the cross-section taken perpendicular to the length thereof, as shown in FIG. 4. The cross-sectional shape of the daylighting section 11 is however by no means limited to a hexagon and may be a pentagon or a triangle. FIGs. 5A to 5D are cross-sectional views of shape variations of the daylighting sections.
FIG. 5A shows a daylighting section 11a that is an isosceles triangle in the cross-section taken perpendicular to the length thereof.
FIG. 5B shows a daylighting section 11b that is trapezoidal in the cross-section taken perpendicular to the length thereof.
FIG. 5C shows a daylighting section 11c that is a polygonal prism with a curved side surface.
FIG. 5D shows a first daylighting section 11d and a second daylighting section 11e provided on different faces of the base material 10. The first daylighting section 11d and the second daylighting section 11e are provided on the respective faces of the base material 10. The first daylighting section 11d, provided on one of the faces of the base material 10, has the same shape as the daylighting section 11. The second daylighting section 11e, provided on the other face, is an isosceles triangle in the cross-section thereof. The daylighting sections provided on the two faces of the base material 10 do not necessarily have the shapes shown in FIG. 5D.
The daylighting sections 11 of the present embodiment are provided on the exterior 2 side of the base material 10, but may alternatively be provided on the interior 3 side. FIG. 6A shows a path of light L2 when the daylighting sections 11 are disposed facing the exterior 2. FIG. 6B shows a path of light L2 when the daylighting sections 11 are disposed facing the interior 3. As shown in FIGs. 6A and 6B, light L2 takes similar paths regardless of on which one of the faces of the base material 10 the daylighting sections 11 are disposed. These layouts would hence deliver similar advantages.

Methods of Manufacturing Daylighting Device

Next will be described methods of manufacturing the daylighting device 1 in accordance with the present embodiment. The following will describe three manufacturing methods (first to third manufacturing methods) as major examples of the method of manufacturing the daylighting device 1.

First Manufacturing Method

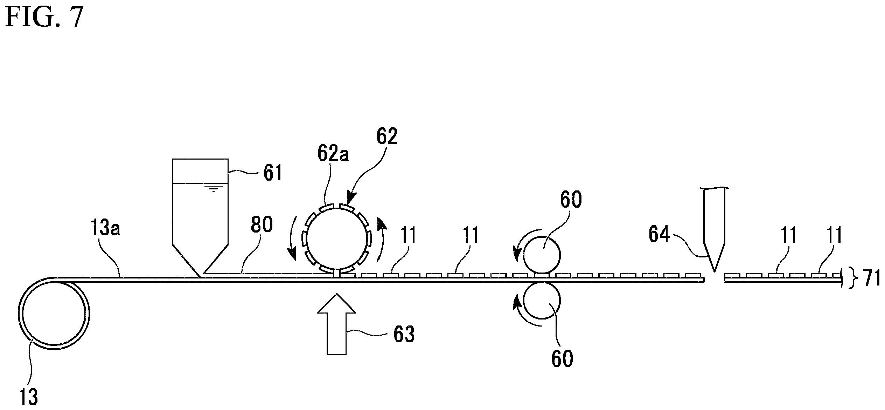

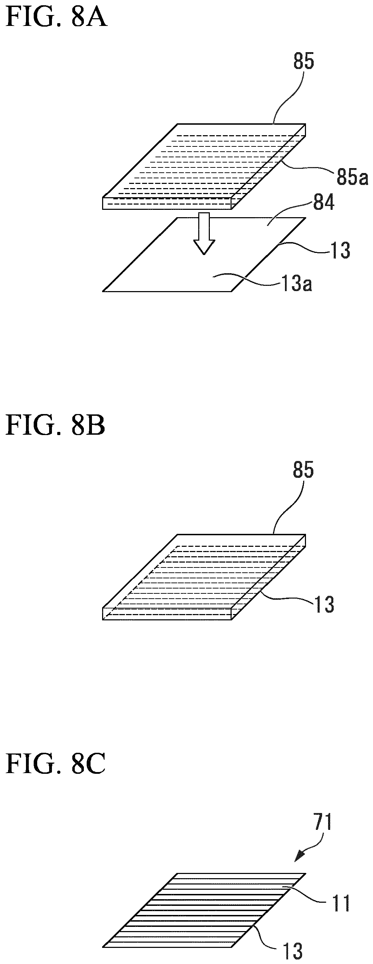

The first method of manufacturing the daylighting device 1 includes a step of forming a resin sheet (daylighting film) 71 that includes daylighting sections 11 and gap portions 12 between the daylighting sections 11 and a step of attaching the resin sheet 71 to the first face 10a of the transparent base material 10.
The resin sheet is fabricated, for example, by any one of the methods shown in FIGs. 7 and 8A to 8C.
A method of manufacturing a resin sheet will be described in reference to FIG. 7.
First, a pair of rollers 60 and 60 is rotated to unwind a roll of the support base material 13 for feeding.
Next, a photocuring resin 80 is applied, using a resin applicator 61, to one of faces (face 13a) of the support base material 13.
Next, the photocuring resin 80 is pressed under a transfer face 62a of a rotating transfer roller mold 62. Simultaneously, the photocuring resin 80 is irradiated with light 63 such as ultraviolet light. This process transfers the irregular shape of the transfer face 62a of the transfer roller mold 62 onto the photocuring resin 80 along the lengthwise direction of the support base material 13, thereby forming the daylighting sections 11 made of the photocuring resin 80 on the face 13a of the support base material 13.
Next, the support base material 13 on which the daylighting sections 11 have been formed is cut perpendicular to the lengthwise direction of the support base material 13 using a cutter 64, to form a resin sheet (daylighting film) 71 having the daylighting sections 11 of a prescribed length (size) formed on the face 13a.
That completes the manufacture of the resin sheet 71.

Other methods of manufacturing a resin sheet will be described in reference to FIGs. 8A to 8C.

First of all, as shown in FIG. 8A, a thermosetting or ultraviolet curing resin is applied to one of faces (transfer face 85a) of the support base material 13 to form an uncured resin layer 84 thereon. Then, a mold 85 having an irregular shape formed on the transfer face 85a thereof is placed on the resin layer 84.

Next, as shown in FIG. 8B, the transfer face 85a of the mold 85 is pressed to the face 13a of the support base material 13 to transfer the irregular shape, and the resin layer 84 is cured. Where a thermosetting resin is used as the resin layer 84, the resin layer 84 is heated while the support base material 13 is being pressed under the mold 85. Consequently, the irregular shape of the mold 85 having been transferred to the resin layer 84 is fixed, thereby forming the daylighting sections 11 on the face 13a of the support base material 13 as shown in FIG. 8C. Meanwhile, where an ultraviolet curing resin is used as the resin layer 84, the resin layer 84 is irradiated with light such as ultraviolet light while the support base material 13 is being pressed under the mold 85. Consequently, the irregular shape of the mold 85 having been transferred to the resin layer 84 is fixed, thereby forming the daylighting sections 11 on the face 13a (cured layer) of the support base material 13 as shown in FIG. 8C.

That completes the manufacture of the resin sheet 71.

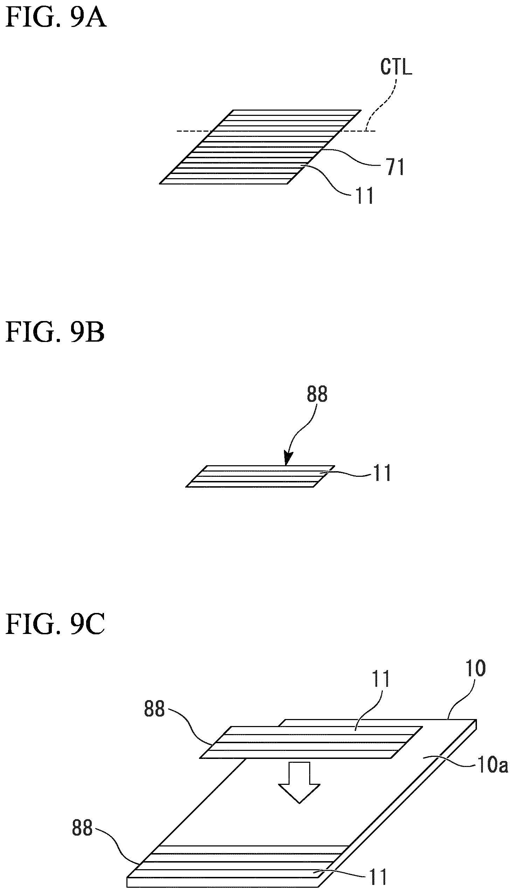

Next, the resin sheet 71 on which the daylighting sections 11 have been formed or the support base material 13 on which the daylighting sections 11 have been formed is cut, as shown in FIG. 9A, in the lengthwise direction of the daylighting sections 11 (e.g., along broken line CTL), to form a daylighting member 88 of a prescribed size as shown in FIG. 9B.

A plurality of daylighting members 88 is then disposed on the face 10a of the base material 10 with gaps being left between the daylighting members 88 as shown in FIG. 9C. The daylighting members 88 are provided on the face 10a of the base material 10 in such a manner that the daylighting sections 11 have their lengthwise direction perpendicular to the lengthwise direction of the base material 10. That completes the manufacture of the daylighting device 1 in accordance with the present embodiment.

Second Manufacturing Method

The second manufacturing method forms in advance a plurality of daylighting sections and gap portions between the daylighting sections on the first face 10a of a light-transmitting plate material (base material 10) and then filling some of the gap portions 12 with a resin material to form the light-transmitting areas TA.

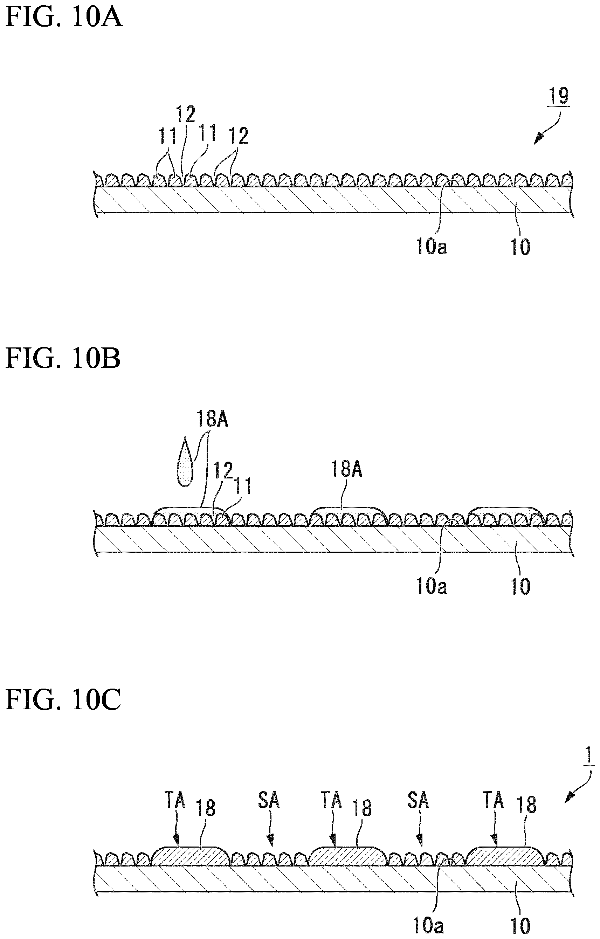

First, a whole-area daylighting base material 19 is prepared that, as shown in FIG. 10A, has daylighting sections 11 across the entire first face 10a of the base material 10. The whole-area daylighting base material 19 may be fabricated, for example, by attaching the resin sheet 71 so as to cover the entire first face 10a of the base material 10.

Next, referring to FIG. 10B, an uncured resin material 18A is dispensed over some of the gap portions 12 provided between the daylighting sections 11 of the whole-area daylighting base material 19.

Next, referring to FIG. 10C, the uncured resin material 18A is cured to form resin-filled sections 18.

These processes form the resin-filled sections 18 filling some of the gap portions 12, to obtain the daylighting device 1 having the light-transmitting areas TA formed thereon. The resin-filled sections 18 are preferably made of either the same transparent resin material or a transparent material that has the same refractive index as the daylighting sections 11. This structure may enable a person in the interior 3 to clearly see the exterior 2 through the light-transmitting areas TA.

Third Manufacturing Method

The third manufacturing method presses a mold to the first face 10a of the base material 10 to form the daylighting sections 11.

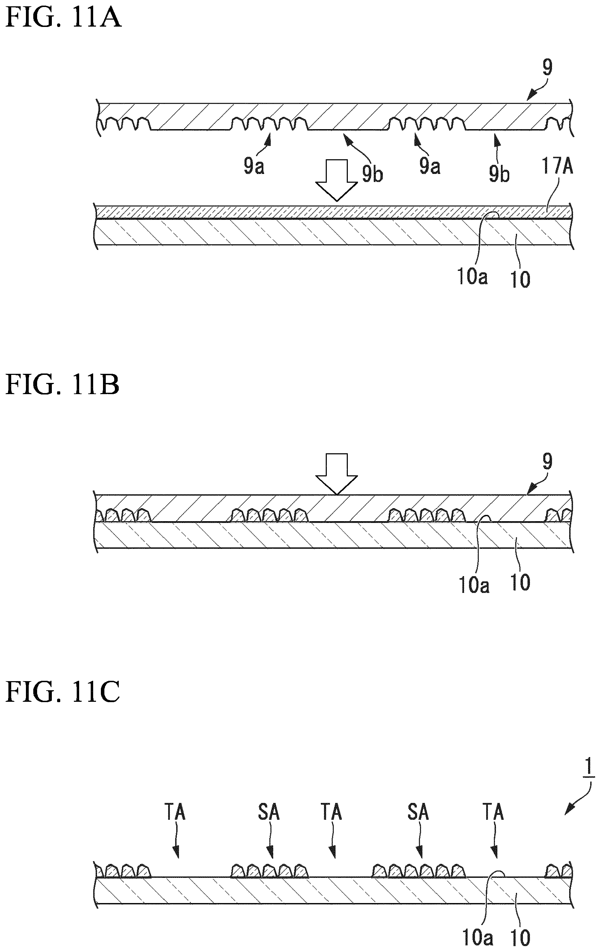

First, referring to FIG. 11A, an uncured thermosetting resin or an uncured ultraviolet curing resin is applied to the first face 10a of the base material 10 to form a resin layer 17A thereon. Meanwhile, a mold 9 for the daylighting sections 11 is prepared. The mold 9 includes daylighting-structure-forming sections (irregular regions) 9a that have a shape that is a mirror image of the daylighting sections 11 and flat light-transmitting-area-forming sections (flat regions) 9b. The daylighting-structure-forming sections 9a and the light-transmitting-area-forming sections 9b are arranged in an alternating fashion.

The mold 9 is then placed on the uncured resin layer 17A, and pressure is applied as shown in FIG. 11B. The uncured resin material spreads into the cavities of the mold 9 by capillary action, leaving no empty space therein.

Next, the resin layer 17A is cured to form a cured layer 17 while the resin layer 17A is being pressed under the mold 9. If a thermosetting resin is used as the resin layer 17A, the resin layer 17A is heated. If an ultraviolet curing resin is used as the resin layer 17A, the resin layer 17A is irradiated with ultraviolet light via the base material 10.

Next, the cured layer 17, which is cured, is separated from the mold. Consequently, the daylighting areas SA and the light-transmitting areas TA corresponding respectively to the daylighting-structure-forming sections 9a and the light-transmitting-area-forming sections 9b are formed on the first face 10a of the base material 10.

These processes complete the manufacture of the daylighting device 1 having the daylighting areas SA and the light-transmitting areas TA formed thereon.

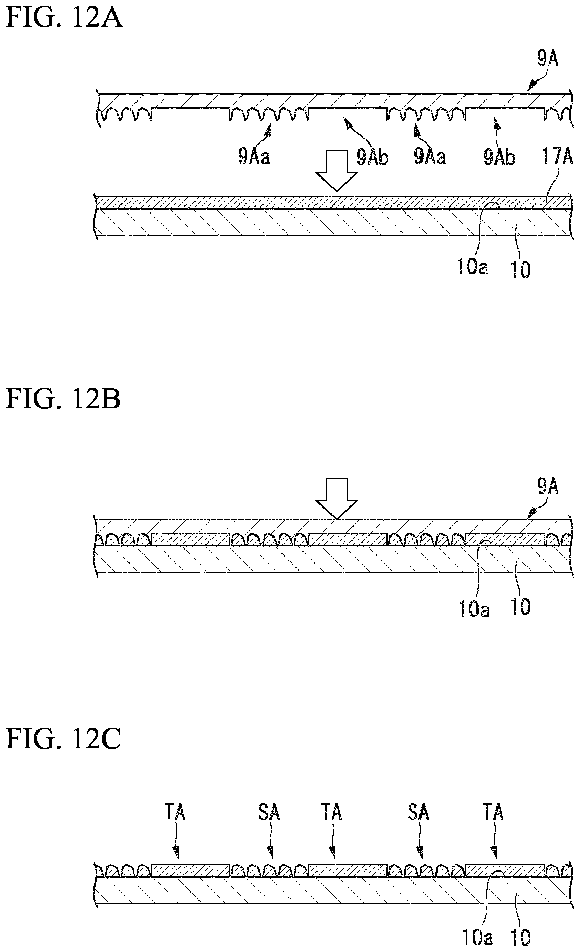

As a variation example of the third manufacturing method, the daylighting sections 11 may be formed on the first face 10a of the base material 10 by the manufacturing method shown in FIGs. 12A to 12C.

In this variation example of the third manufacturing method, pressure is applied to the mold 9A with the uncured resin layer 17A formed on the first face 10a of the base material 10. The mold 9A includes daylighting-structure-forming sections (irregular regions) 9Aa similarly to the mold 9 and further includes light-transmitting-area-forming sections (flat regions) 9Ab that are cavities with flat bottoms. The daylighting-structure-forming sections 9Aa and the light-transmitting-area-forming sections 9Ab are arranged in an alternating fashion.

The mold 9A is then placed on the uncured resin layer 17A, and pressure is applied as shown in FIG. 12B, so that the uncured resin spreads into the daylighting-structure-forming sections 9Aa and the light-transmitting-area-forming sections 9Ab of the mold 9A, leaving no empty space therein.

The resin layer 17A is then cured to form the cured layer 17, after which the mold is separated. Consequently, the daylighting areas SA and the light-transmitting areas TA corresponding respectively to the daylighting-structure-forming sections 9Aa and the light-transmitting-area-forming sections 9Ab are formed on the first face 10a of the base material 10 as shown in FIG. 12C. The light-transmitting areas TA formed in this manner are convex and have a height, above the first face 10a of the base material 10, that is substantially equal to the protruding height of the daylighting sections 11 in the daylighting areas SA. These light-transmitting areas TA may achieve similar advantages.

Function and Effect

In the daylighting device 1 in accordance with the present embodiment, the daylighting areas SA refract outdoor light in the direction of the ceiling of the interior 3 to illuminate the interior. This feature may advantageously make savings on energy consumption of the building's interior lighting equipment during the daytime.

In addition, in the day lighting device 1 in accordance with the present embodiment, the daylighting areas SA and the light-transmitting areas TA are arranged in a vertically alternating fashion in the plane of the first face 10a of the base material 10. In other words, the light-transmitting areas TA are positioned between the daylighting areas SA. This feature may enable a person in the interior 3 looking at the daylighting device 1 to see the scenery in the exterior 2 through the light-transmitting areas TA. Therefore, the present embodiment may provide the daylighting device 1 which may guarantee see-through visibility.

Additionally, in the daylighting device 1 in accordance with the present embodiment, the light-transmitting areas TA are provided sandwiching the daylighting areas SA in a vertical direction in plan view. As described earlier, a glaring light source may exhibit a low glare index PGSV value if the ambient (background) luminance thereof is increased. The light-transmitting areas TA allow outdoor light L to travel directly in the direction of a person in the interior 3 and would hence provide sufficient background luminance against the luminance of the daylighting areas SA which is a glaring light source. Thus, the provision of the light-transmitting areas TA around the daylighting areas SA can reduce glare.

Variation Examples 1 to 7 of First Embodiment

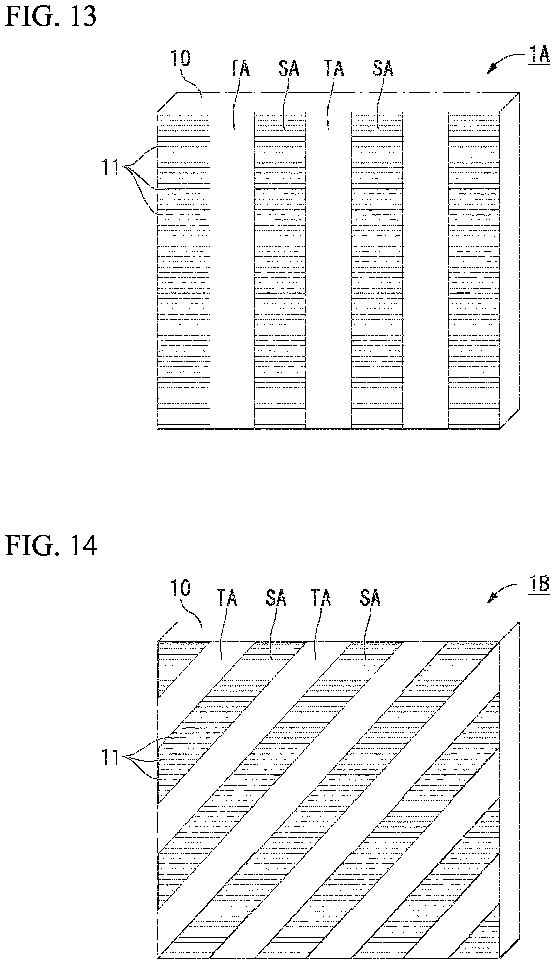

Next will be described daylighting devices 1A to 1G in accordance respectively with Variation Examples 1 to 7 of the first embodiment in reference to FIGs. 13 to 20.

The daylighting devices 1A to 1G in accordance respectively with Variation Examples 1 to 7 have substantially the same basic structure as the first embodiment. Differences lie in the layout of the daylighting areas and the light-transmitting areas TA. Members that are the same as those in the previous embodiment are indicated by the same reference signs or numerals, and description thereof is omitted.

FIG. 13 is an illustration of an overall structure of a daylighting device 1A in accordance with Variation Example 1 of the first embodiment.

In the daylighting device 1A, the light-transmitting areas TA and the daylighting areas SA extend vertically and are arranged in horizontally alternating fashion in plan view to form a stripe pattern. To put it differently, the daylighting areas SA and the light-transmitting areas TA in the daylighting device 1A are arranged like alternating vertical stripes in plan view.

This feature may achieve advantages that are similar to those achieved by the embodiments described above. Additionally, since the light-transmitting areas TA and the daylighting areas SA extend vertically and are arranged like alternating stripes in the daylighting device 1A in accordance with the present variation example, the occupant moving transversely in front of the daylighting device 1A would in the present variation example move his/her eyes skimming over the daylighting areas SA, which renders the daylighting areas SA less prominent and thereby increases see-through visibility for the outside scenery.

FIG. 14 is an illustration of an overall structure of a daylighting device 1B in accordance with Variation Example 2 of the first embodiment.

In the daylighting device 1B, the light-transmitting areas TA and the daylighting areas SA extend obliquely generally from top to bottom and alternate to form a stripe pattern. To put it differently, the daylighting areas SA and the light-transmitting areas TA in the daylighting device 1B are arranged like alternating stripes extending obliquely in plan view.

This feature may achieve advantages that are similar to those achieved by the embodiments described above.

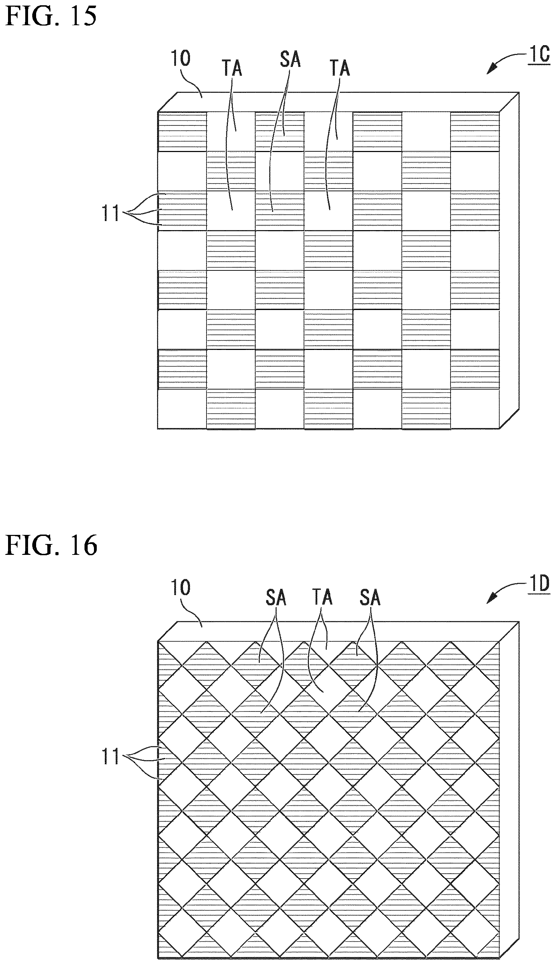

FIG. 15 is an illustration of an overall structure of a daylighting device 1C in accordance with Variation Example 3 of the first embodiment. FIG. 16 is an illustration of an overall structure of a daylighting device 1D in accordance with Variation Example 4 of the first embodiment.

The daylighting areas SA and the light-transmitting areas TA in the daylighting devices 1C and 1D are arranged in a checkerboard pattern. When compared with the daylighting device 1C, the daylighting device 1D has its checkerboard pattern tilted.

This feature may achieve advantages that are similar to those achieved by the embodiments described above.

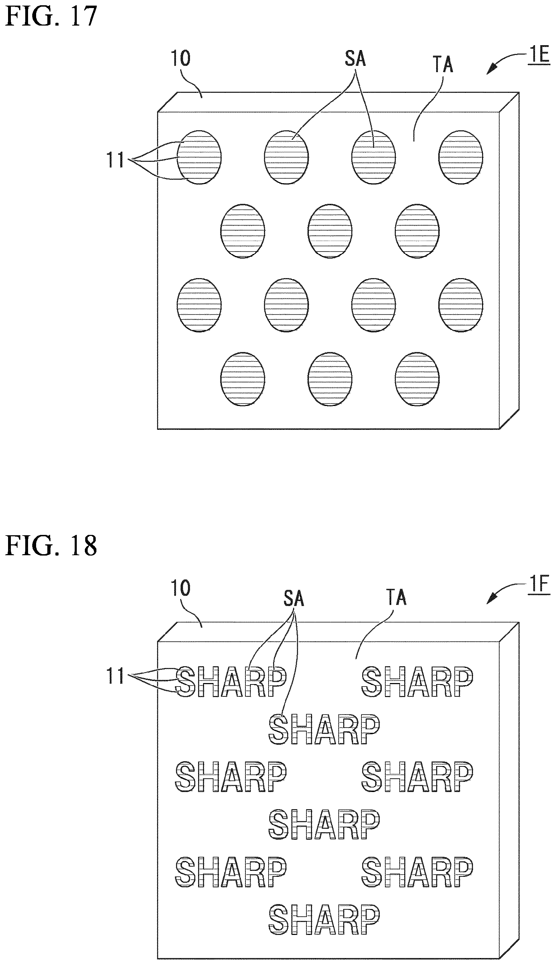

FIG. 17 is an illustration of an overall structure of a daylighting device 1E in accordance with Variation Example 5 of the first embodiment.

The daylighting areas SA in the daylighting device 1E are circular in plan view and arranged in a staggered pattern.

This feature may achieve advantages that are similar to those achieved by the embodiments described above.

FIG. 18 is an illustration of an overall structure of a daylighting device 1F in accordance with Variation Example 6 of the first embodiment.

The daylighting areas SA in the daylighting device 1F are arranged to show information including text, logos, or art works such as paintings.

This feature may achieve advantages that are similar to those achieved by the embodiments described above and an additional advantage of increased uniqueness of the design of the daylighting device 1F.

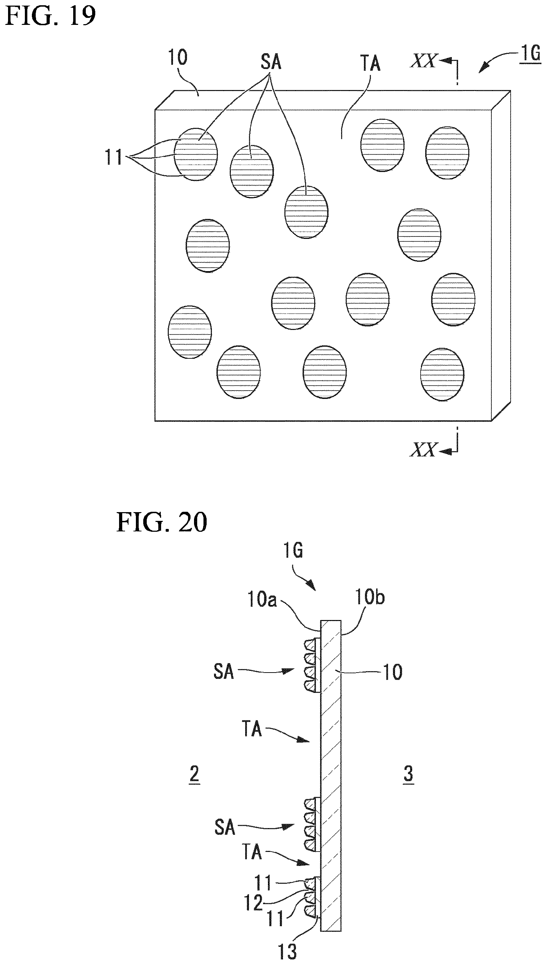

FIG. 19 is an illustration of an overall structure of a daylighting device 1G in accordance with Variation Example 7 of the first embodiment. FIG. 20 is a cross-sectional view, taken along line XX-XX in FIG. 19, of the daylighting device 1G.

The daylighting areas SA in the daylighting device 1G are circular in plan view and arranged in a non-periodic fashion.

Take any straight line XX-XX on the first face 10a of the base material 10 of the daylighting device 1G as shown in FIG. 19. The daylighting areas SA and the light-transmitting area TA are arranged in a non-periodic, alternating fashion as viewed along straight line XX-XX as shown in FIG. 20.

This structure in which the daylighting areas SA and the light-transmitting area TA are provided so as to alternate in at least one direction in the plane of the first face 10a of the base material 10 may enable a person in the interior 3 to see the scenery in the exterior 2 through the light-transmitting area TA while providing a sufficient daylighting function.

As detailed so far, the daylighting areas SA and the light-transmitting areas TA in the daylighting device 1 in accordance with the first embodiment and those in the daylighting devices 1A to 1G in accordance with the variation examples are provided so as to alternate in at least one direction in the plane of the first face 10a. This structure of the daylighting device 1 and 1A to 1G may enable a person in the interior 3 to see the scenery in the exterior 2 through the light-transmitting areas TA while providing a sufficient daylighting function.

Additionally, the daylighting areas SA in the daylighting devices 1C to 1G in accordance with Variation Examples 3 to 7 are surrounded by the light-transmitting area(s) TA. This structure in which the daylighting areas SA are surrounded by the light-transmitting area(s) TA may increase the influence of background luminance, which may in turn further restrain glare.

Second Embodiment

Next will be described a daylighting device 101 in accordance with a second embodiment.

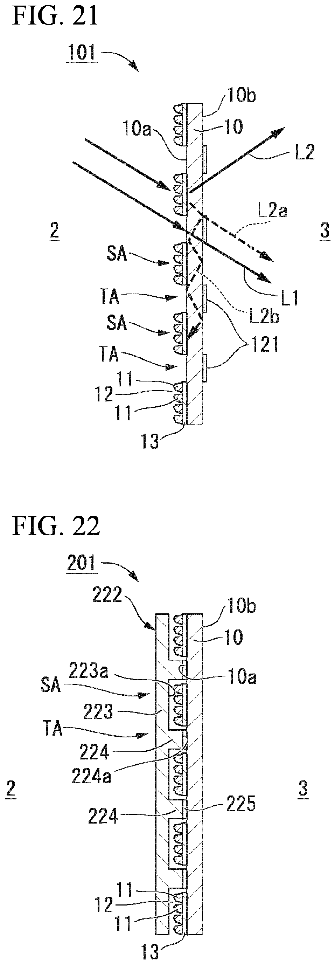

FIG. 21 is an illustration of an overall structure of the daylighting device 101. The daylighting device 101 in accordance with the second embodiment differs from the daylighting device 1 in accordance with the first embodiment primarily in that in the former, the light-transmitting areas TA have a lower optical transmittance than the daylighting areas SA. Members that are the same as those in a foregoing embodiment are indicated by the same reference signs or numerals, and description thereof is omitted.

The daylighting device 101 includes a light-transmitting, platelike base material 10, a plurality of daylighting sections 11, a support base material 13, and light-transmission-restraining films 121. The daylighting sections 11 are disposed on a first face 10a of the base material 10. The support base material 13 is positioned between the base material 10 and the daylighting sections 11. The light-transmission-restraining films 121 are attached to a second face 10b of the base material 10.

Similarly to the first embodiment, the first face 10a of the base material 10 in the daylighting device 101 has a plurality of daylighting areas SA and a plurality of light-transmitting areas TA arranged like alternating stripes thereon. The light-transmission-restraining films 121 are positioned so as to align with the light-transmitting areas TA in plan view. Therefore, out of light traveling from the exterior 2 into the interior 3, the light that travels through the light-transmitting areas TA inevitably passes through the light-transmission-restraining films 121.

The light-transmission-restraining films 121 are transparent films with a total light transmittance of less than 90%. The light-transmission-restraining films 121 restrain light transmission by absorbing part of light therein or thereon. The light-transmission-restraining films 121 may be transparent films containing a pigment that absorbs only light of particular visible wavelengths or transparent films containing a component that absorbs light across the whole spectrum. The daylighting device 101 in accordance with the present embodiment exhibits a lower light transmittance in the light-transmitting areas TA than in the daylighting areas SA by virtue of the inclusion of the light-transmission-restraining films 121.

The daylighting device 101 in accordance with the present embodiment reduces sunlight penetration of the light-transmitting areas TA by virtue of the inclusion of the light-transmission-restraining films 121. This structure may protect the occupant of the interior 3 from uncomfortable glare even when the sun reaches such a specific height that sunlight shines directly on the occupant of the interior 3.

Referring to FIG. 21, in the daylighting device 101 in accordance with the present embodiment, the light-transmission-restraining films 121 absorb light L2a refracted in the daylighting areas SA obliquely downward into the light-transmitting areas TA and light L2b ("stray glare") refracted in the daylighting areas SA and repeatedly reflected inside the base material 10.

Such light L2a and L2b could reach the occupant and be perceived as uncomfortable glare. Therefore, the daylighting device 101 in accordance with the present embodiment may reduce glare by virtue of the inclusion of the light-transmission-restraining films 121.

The light-transmission-restraining films 121 of the present embodiment are attached to the second face 10b of the base material 10. Alternatively, the light-transmission-restraining films 121 may be attached to the first face 10a. As another alternative, the light-transmission-restraining films 121 may be attached to both the first and second faces 10a and 10b of the substrate 10. As a further alternative, the base material 10 may be made of two types of transparent members having different optical transmittances, without using the light-transmission-restraining films 121. More specifically, the base material 10 may be formed by combining members with a lower optical transmittance as the light-transmitting areas TA and members with a higher optical transmittance as the daylighting areas SA. These alternatives may achieve advantages that are similar to those achieved by the present embodiment.


Third Embodiment

Next will be described a daylighting device 201 in accordance with a third embodiment.

FIG. 22 is an illustration of an overall structure of the daylighting device 201. The daylighting device 201 in accordance with the third embodiment differs from the daylighting device 1 in accordance with the first embodiment primarily in that the former includes a protection plate 222. Members that are the same as those in a foregoing embodiment are indicated by the same reference signs or numerals, and description thereof is omitted.

The daylighting device 201 includes a light-transmitting, platelike base material 10, a plurality of daylighting sections 11, a support base material 13, the transparent protection plate 222, and an adhesion layer 225. The daylighting sections 11 are disposed on a first face 10a of the base material 10. The support base material 13 is positioned between the base material 10 and the daylighting sections 11. The protection plate 222 is disposed on the first face 10a of the base material 10. The adhesion layer 225 adhesively fixes the protection plate 222 to the base material 10. Similarly to the first embodiment, the first face 10a of the base material 10 in the daylighting device 201 has a plurality of daylighting areas SA and a plurality of light-transmitting areas TA arranged like alternating stripes thereon.

The protection plate 222 includes a platelike main body portion 223 and protrusion portions 224 that project out of one of the faces (face 223a) of the main body portion 223. The protrusion portions 224 have such a shape that they can be superposed on the light-transmitting areas TA in plan view. The protrusion portions 224 each have an end face 224a that is flat. The end faces 224a are fixed to the first face 10a of the base material 10 by the adhesion layer 225. The protrusion portions 224 are positioned between the daylighting areas SA. In other words, the protection plate 222 is fixed to the base material 10 in the light-transmitting areas TA.

In the present embodiment, the daylighting sections 11 can be protected by the protection plate 222 covering the first face 10a of the base material 10 on which the daylighting sections 11 are disposed. This structure prevents scratches on the daylighting sections 11. The provision of the protection plate 222 may also seal the spaces containing the daylighting sections 11. Accordingly, the spaces containing the daylighting sections 11 may be either filled with an inert gas or depressurized to restrain the daylighting sections 11 from coming into contact with air and to hence restrain the resin material from which the daylighting sections 11 are made from degrading.

In the daylighting device 201 in accordance with the present embodiment, the light-transmitting areas TA are used for adhesively fixing the protection plate 222 to the base material 10. The protection plate 222 may therefore be supported without using, for example, an outer frame, which can in turn avoid increases in vertical and horizontal dimensions.

In the daylighting device 201 in accordance with the present embodiment, the protection plate 222 may have additional functions such as UV cutoff, heat ray cutoff, and electromagnetic shield functions.

In the daylighting device 201 in accordance with the present embodiment, the protection plate 222 is provided with the protrusion portions 224 so as to allow for gaps that accommodate the daylighting sections 11 when the protection plate 222 is fixed to the first face 10a of the base material 10. Alternatively, the base material 10 may be provided with equivalents to the protrusion portions 224 with no protrusion portions 224 being provided on the protection plate 222.

In the daylighting device 201 in accordance with the present embodiment, the protection plate 222 is provided with the protrusion portions 224 projecting toward the base material 10 so that the protection plate 222 can be fixed to the base material via the protrusion portions 224 by an adhesion layer. This is not the only feasible structure, and alternatives are possible.

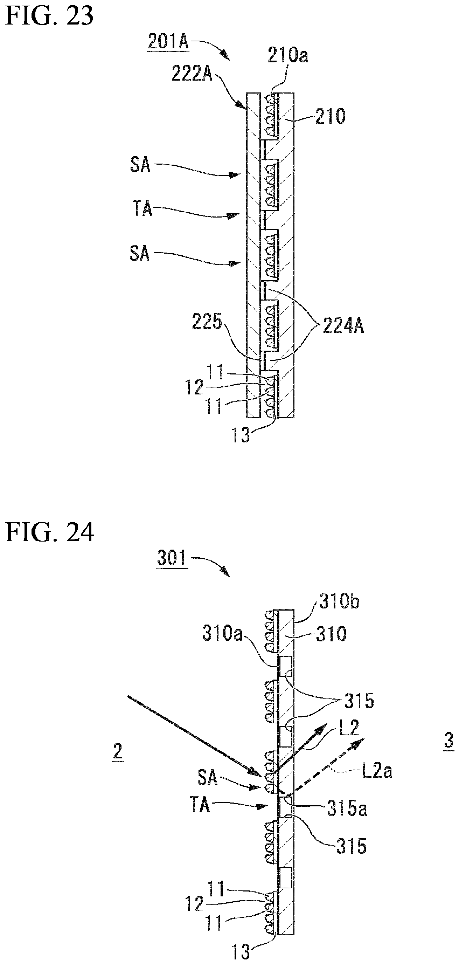

FIG. 23 represents a daylighting device 201A in accordance with a variation example of the present embodiment. The daylighting device 201A includes a light-transmitting, platelike base material 210, a plurality of daylighting sections 11, a support base material 13, a transparent protection plate 222A, and an adhesion layer 225. The daylighting sections 11 are disposed on a first face 210a of the base material 210. The support base material 13 is positioned between the base material 210 and the daylighting sections 11. The protection plate 222A is disposed on the first face 210a of the base material 210. The adhesion layer 225 adhesively fixes the protection plate 222A to the base material 210. The base material 210 is provided with protrusion portions 224A that project out of the first face 210a. The protrusion portions 224A each have an end face where the protrusion portion 224A is fixed via the adhesion layer 225. This embodiment may achieve similar advantages. The base material 210 in the daylighting device 201A may be manufactured by, for example, the manufacturing method shown in FIGs. 10A to 10C or 12A to 12C.

Fourth Embodiment

Next will be described a daylighting device 301 in accordance with a fourth embodiment.

FIG. 24 is an illustration of an overall structure of the daylighting device 301. The daylighting device 301 in accordance with the fourth embodiment differs from the daylighting device 1 in accordance with the first embodiment primarily in that the former have hollow portions 315 in a base material 310. Members that are the same as those in a foregoing embodiment are indicated by the same reference signs or numerals, and description thereof is omitted.

The daylighting device 301 includes the light-transmitting, platelike base material 310, a plurality of daylighting sections 11, and a support base material 13. The daylighting sections 11 are disposed on a first face 310a of the base material 310. The support base material 13 is positioned between the base material 310 and the daylighting sections 11. Similarly to the first embodiment, the first face 310a of the base material 310 in the daylighting device 301 has a plurality of daylighting areas SA and a plurality of light-transmitting areas TA arranged like alternating stripes thereon.

The base material 310 has the hollow portions 315 therein. The hollow portions 315 each have a rectangular cross-section. The hollow portions 315 are positioned so as to align with the light-transmitting areas TA in plan view. The base material 310 has a smaller total thickness in portions thereof where the light-transmitting areas TA are formed than in portions thereof where the daylighting areas SA are formed, due to the provision of the hollow portions 315.

In the daylighting device 301 in accordance with the present embodiment, the provision of the hollow portions 315 may enable upper interfaces 315a of the hollow portions 315 to reflect, upward, light L2a that has been refracted in the daylighting areas SA obliquely downward into the light-transmitting areas TA, thereby reducing glare.

In the daylighting device 301 in accordance with the present embodiment, the provision of the hollow portions 315 may also reduce the weight of a daylighting plate.

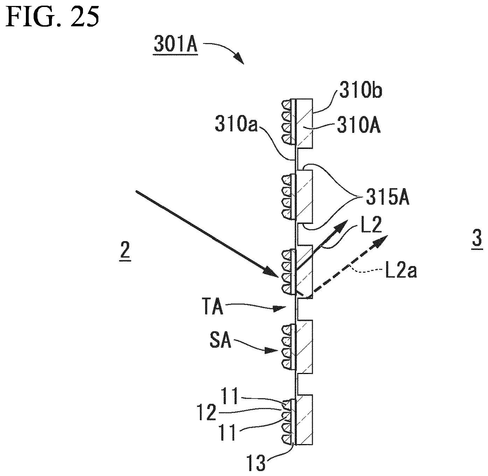

The daylighting device 301 in accordance with the present embodiment has so far been described, as an example, to have the hollow portions 315 in the base material 310. This is not the only feasible structure, and alternatives are possible. FIG. 25 represents a daylighting device 301A in accordance with a variation example of the present embodiment. The daylighting device 301A has cavities 315A, instead of the hollow portions 315, in a second face 310b of the base material 310A. The daylighting device 301A in accordance with the variation example may achieve similar advantages if the daylighting device 301A has a smaller total thickness in portions thereof where the light-transmitting areas TA are formed than in portions thereof where the daylighting areas SA are formed.

Fifth Embodiment

Next will be described a daylighting device 401 in accordance with a fifth embodiment.

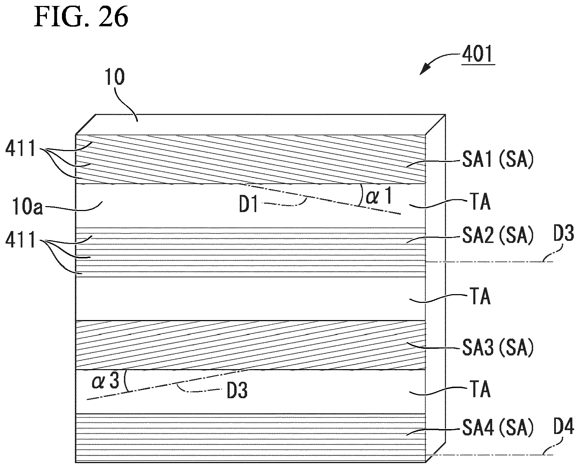

FIG. 26 is an illustration of an overall structure of the daylighting device 401. The daylighting device 401 in accordance with the fifth embodiment differs from the daylighting device 1 in accordance with the first embodiment in that the former includes daylighting sections 411 that extend in a direction that is inclined with respect to the horizontal direction.

The daylighting device 401 includes a light-transmitting, platelike base material 10, the daylighting sections 411, and a support base material 13. The daylighting sections 411 are disposed on a first face 10a of the base material 10. The support base material 13 is positioned between the base material 10 and the daylighting sections 411. Similarly to the first embodiment, the first face 10a of the base material 10 in the daylighting device 401 has a plurality of daylighting areas SA (four daylighting areas SA in the present embodiment) and a plurality of light-transmitting areas TA (three light-transmitting areas TA in the present embodiment) arranged like alternating stripes thereon. The four daylighting areas SA extending in the horizontal direction will be referred to as, sequentially from top to bottom, a first daylighting area SA1, a second daylighting area SA2, a third daylighting area SA3, and a fourth daylighting area SA4.

Similarly to the daylighting sections 11 of the first embodiment, the daylighting sections 411 are tiny protrusions arranged in stripes. The daylighting sections 411 extend parallel to each other. The daylighting sections 411 are polygonal in the cross-section taken perpendicular to the length thereof.

The direction in which the daylighting sections 411 extend is specified differently for each daylighting area SA1 to SA4. In the first daylighting area SA1, the daylighting sections 411 extend linearly in a first direction D1 in the plane of the first face 10a. The first direction D1 is tilted by a first angle of inclination $\alpha$1 with respect to the horizontal direction. The first angle of inclination $\alpha$1 is, for example, +10°. In the second daylighting area SA2, the daylighting sections 411 extend linearly in a second direction D2 in the plane of the first face 10a. The second direction D2 is parallel to the horizontal direction. In the third daylighting area SA3, the daylighting sections 411 extend linearly in a third direction D3 in the plane of the first face 10a. The third direction D3 is tilted by a third angle of inclination $\alpha$3 with respect to the horizontal direction. The third angle of inclination $\alpha$3 is, for example, -10°. To put it differently, the daylighting sections 411 in the third daylighting area SA3 and the daylighting sections 411 in the first daylighting area SA1 are tilted in an opposite manner. In the fourth daylighting area SA4, the daylighting sections 411 extend linearly in a fourth direction D4 in the plane of the first face 10a. The fourth direction D4 is parallel to the horizontal direction. To put it differently, the daylighting sections 411 in the fourth daylighting area SA4 are parallel to the daylighting sections 411 in the second daylighting area SA2.

The light reflecting off the daylighting sections 411 toward the ceiling travels in a tilted direction in accordance with the inclination of the daylighting sections 411. Therefore, light leaves the daylighting sections 411 in the first to third daylighting areas SA1 to SA3 in different directions. Meanwhile, light leaves the daylighting sections 411 in the fourth daylighting area SA4 in the same direction as the light leaving those in the second daylighting area SA2. As demonstrated here, the daylighting device 401 may distribute light broadly across the ceiling of the interior 3 in which the daylighting device 401 is installed, thereby illuminating the interior 3 uniformly.

The daylighting sections 411 in the daylighting areas SA have different inclinations. The light (glaring light) reflecting off the daylighting sections 411 in the direction of the room floor travels in tilted directions as determined by the inclinations of the daylighting sections 411. Therefore, the glaring light reflecting off the daylighting areas SA1 to SA4 does not converge to a single spot in the interior 3, which may reduce uncomfortableness of glaring light.

The daylighting sections 411 in the present embodiment are provided, as an example, in three daylighting areas with mutually different inclinations (first to third daylighting areas SA1 to SA3). The daylighting device 401 is, however, by no means limited to this structure. The daylighting device 401 may achieve the advantages described above, provided that the daylighting device 401 has two or more daylighting areas that include daylighting sections 411 extending in different directions.

Sixth Embodiment

Next will be described a daylighting device 501 in accordance with a sixth embodiment.

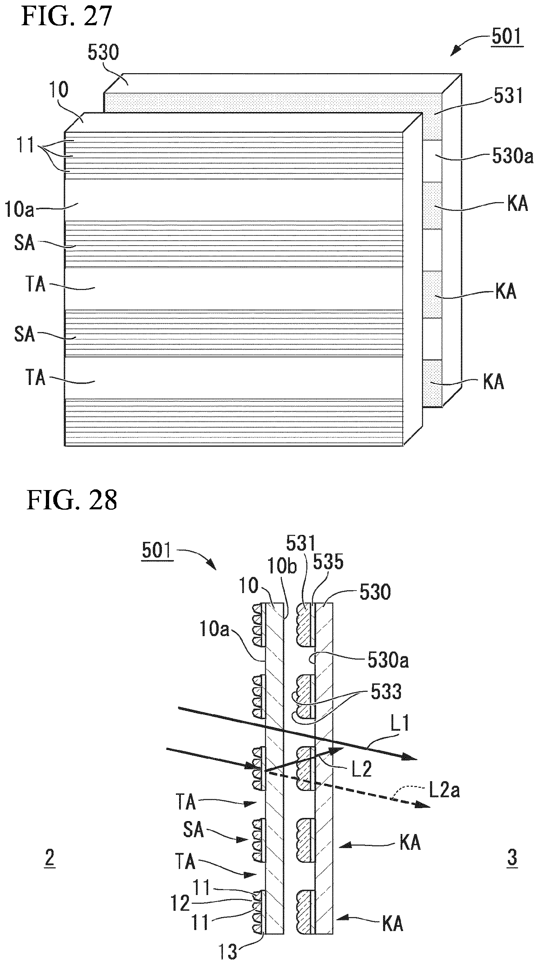

FIG. 27 is an illustration of an overall structure of the daylighting device 501. FIG. 28 is a vertical cross-sectional view of the daylighting device 501. The daylighting device 501 in accordance with the sixth embodiment differs from the daylighting device 1 in accordance with the first embodiment in that the former further includes a plurality of light-diffusion sections 531.

The daylighting device 501 includes a light-transmitting, platelike first base material (base material) 10, a plurality of daylighting sections 11, a support base material 13, a light-transmitting, second base material 530, the light-diffusion sections 531, and a support base material 535. The daylighting sections 11 are disposed on a first face 10a of the first base material 10. The support base material 13 is positioned between the first base material 10 and the daylighting sections 11. The second base material 530 is disposed facing a second face 10b of the first base material 10. The light-diffusion sections 531 are disposed on a first face 530a of the second base material 530. The support base material 535 is positioned between the second base material 530 and the light-diffusion sections 531. Similarly to the first embodiment, the first face 10a of the first base material 10 in the daylighting device 501 has a plurality of daylighting areas SA (four daylighting areas SA in the present embodiment) and a plurality of light-transmitting areas TA (three light-transmitting areas TA in the present embodiment) arranged like alternating stripes thereon.

In the present embodiment, the first base material 10 and the second base material 530 are disposed parallel to each other, and the second face 10b of the first base material 10 faces the first face 530a of the second base material 530.

The light-diffusion sections 531 are fixed to the first face 530a of the second base material 530 with the support base material 535 intervening therebetween. The light-diffusion sections 531 form light-diffusion areas KA. The light-diffusion sections 531 are positioned so as to align substantially with the daylighting areas SA when viewed normal to the first base material 10. To put it differently, the light-diffusion areas KA are disposed in locations where they overlap the daylighting areas SA when viewed normal to the first base material 10. The light-diffusion areas KA refer to the areas in which the light-diffusion sections 531 are provided when viewed normal to the first base material 10 and through which the light penetrating the interior 3 from the exterior 2 travels via the light-diffusion sections 531.

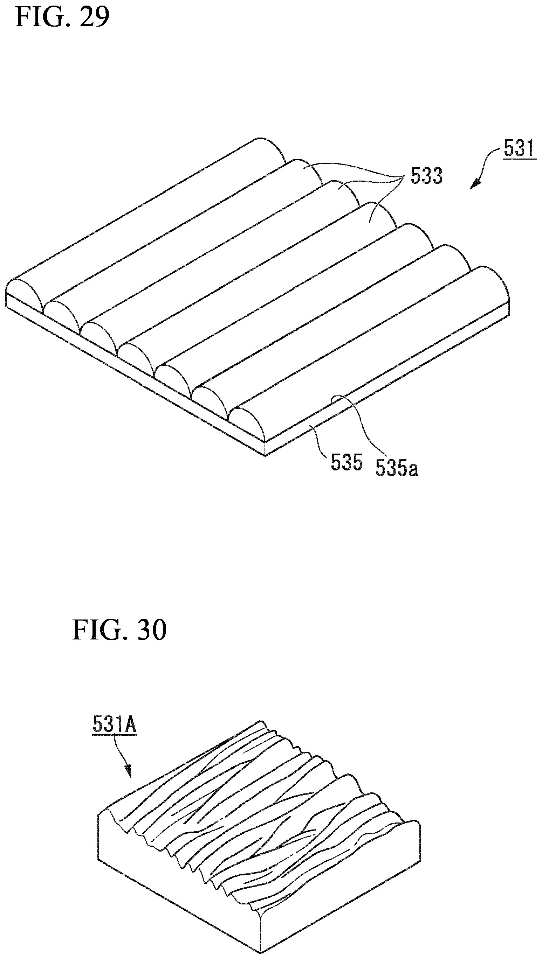

FIG. 29 is a perspective view of an example light-diffusion section 531. The light-diffusion section 531 has light-diffusion properties. Referring to FIG. 29, the light-diffusion section 531 includes the support base material 535 and a plurality of lenticular lenses 533. The lenticular lenses 533 are arranged side by side on a face 535a of the support base material 535.

In the light-diffusion section 531 of the present embodiment, the lenticular lenses 533 extend horizontally and sit one above each other in the vertical direction. Because the lens surfaces of the light-diffusion section 531 arranged in this manner have a non-zero curvature in a vertical plane and have a zero curvature in a horizontal plane, the light-diffusion section 531 diffuses much light in the vertical direction, but does not diffuse light in the horizontal direction. The light-diffusion section 531 is however by no means limited to this structure and may be arranged to exhibit strong light-diffusing properties in the horizontal direction.

The daylighting device 501 may include an anisotropic scattering structure 531A shown in FIG. 30 in place of the light-diffusion sections 531. The anisotropic scattering structure may be, for example, a structure with micrometer-scale irregularities fabricated by surface relief holographic patterning, such as light diffusion control films (trade name: "LSD") manufactured by Luminit, LLC. The daylighting device 501 may include, in place of the light-diffusion sections 531, a light-scattering layer as an isotropic scattering structure in which particles with an aspect ratio of approximately 5 to 500 are dispersed in a continuous layer.

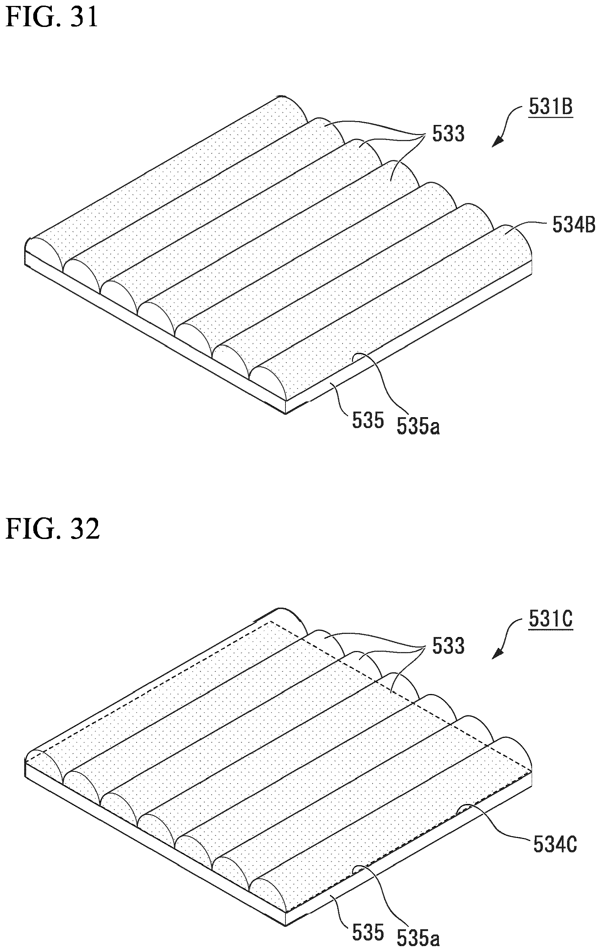

As a further alternative, the daylighting device 501 may include, in place of the light-diffusion sections 531, light-diffusion sections 531B, 531C, or 531D that are respectively combinations of the lenticular lenses 533 and an isotropic diffusion layer 534B, 534C, or 534D as shown in FIGs. 31, 32, and 33. The isotropic diffusion layers 534B, 534C, and 534D are represented by dot patterns in FIGs. 31 to 33.

The light-diffusion section 531B shown in FIG. 31 includes the isotropic diffusion layer 534B on the surfaces of the lenticular lenses 533.

The light-diffusion section 531C shown in FIG. 32 includes the isotropic diffusion layer 534C as an adhesion layer between the lenticular lenses 533 and the face 535a of the support base material 535.

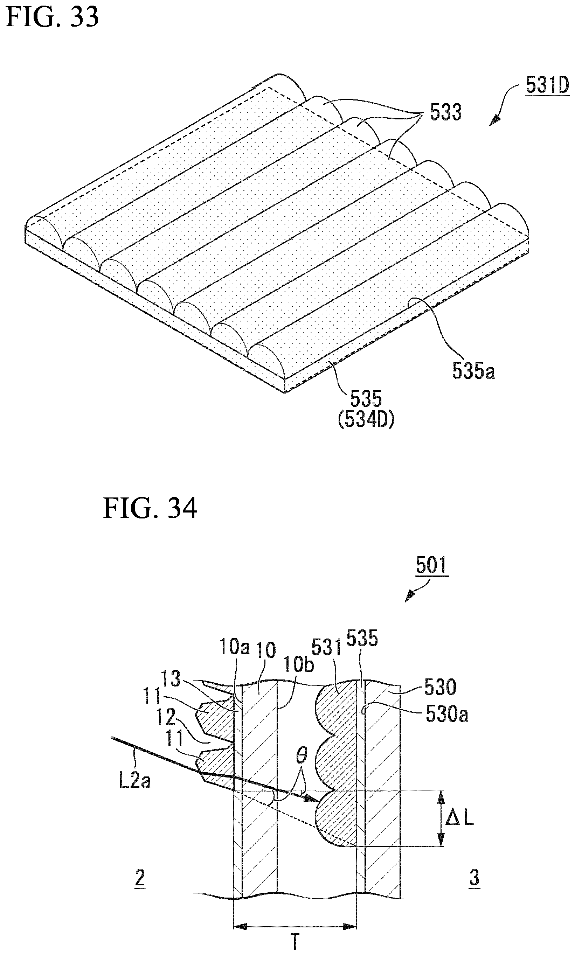

The light-diffusion section 531D shown in FIG. 33 includes the isotropic diffusion layer 534D as the support base material 535.

The isotropic diffusion layers 534B to 534D contain light-diffusing particles being dispersed therein.

Owing to these structures, the lenticular lenses 533 and the isotropic diffusion layers 534B to 534D diffuse light anisotropically and isotropically respectively in the light-diffusion sections 531B, 531C, and 531D. These structures may be employed in the light-diffusion sections of the day lighting device.

Referring back to FIG. 28, paths of light that is incident on the daylighting areas SA and the light-transmitting areas TA of the daylighting device 501 will be described next.

Light L2, incident on the daylighting areas SA, refracts inside the daylighting sections 11 and exits the first base material 10 obliquely upward. The first base material 10 has the light-diffusion areas KA provided overlapping the daylighting areas SA. Therefore, light L2 hits the light-diffusion areas KA on the first face 530a of the second base material 530. In the light-diffusion areas KA, light L2 enters the light-diffusion sections 531 where it is diffused vertically. Part of the light incident on the daylighting areas SA exits obliquely downward into the interior 3, becoming glaring light L2a, and diffuses vertically in the light-diffusion areas KA. Light L2a, since being scattered by the light-diffusion sections 531, decreases in intensity and becomes less glaring to the occupant in the interior 3. Meanwhile, light L2, traveling obliquely upward from the daylighting device 501, slightly decreases in intensity. The scattering by the light-diffusion sections 531 however results in a uniform distribution of light L2, uniformly illuminating the ceiling and wall surfaces of the interior 3. As described here, the daylighting device 501 in accordance with the present embodiment includes the light-diffusion sections 531 and may for this reason be capable of reducing glare. Therefore, the daylighting device 501 may improve the comfort of the interior 3 at a lower cost than conventional art where it is mechanically adjusted how much of the window blind is opened/closed.

Meanwhile, in the light-transmitting areas TA, light L1 enters the daylighting sections 11 obliquely from above and exits obliquely downward into the interior 3. Light L1 exits into the interior 3 without passing through the daylighting sections 11 or the light-diffusion sections 531. Light L1 passes through those areas around the areas where light L2a, which could cause glare, occurs, and provides background luminance that advantageously reduces glare.

The daylighting device 501 in accordance with the present embodiment, similarly to the first embodiment, may refract outdoor light upward in the daylighting sections 11 to illuminate the ceiling of the interior 3, which may fill the need for lighting equipment. In addition, the provision of the light-transmitting areas TA around the daylighting areas SA can increase background luminance and hence reduce the glare from the daylighting areas SA.

FIG. 34 is a cross-sectional view of the daylighting device 501, showing the relative positions of the daylighting sections 11 and the light-diffusion section 531 in detail. The light-diffusion section 531 is preferably formed stretching downward below the daylighting sections 11 as shown in FIG. 34. The light hitting the daylighting device 501 from the exterior 2 enters the daylighting sections 11 obliquely from above. Light L2a, which is part of the light entering the daylighting sections 11, could exit the daylighting sections 11 obliquely downward into the interior 3, which may become a cause for glare. Therefore, the light-diffusion section 531, stretching below the daylighting section 11, may cause light L2a passing through the light-diffusion section 531 and exiting obliquely downward to pass through the light-diffusion section 531. This structure may reduce glare.

More specifically, the light-diffusion section 531 preferably stretches downward beyond the bottom of the daylighting section 11 by $\Delta L$ that is given by the following mathematical expression, where T is the distance between the daylighting section 11 and the light-diffusion section 531, and $\theta$ is the angle of illumination of glaring light L2a leaving the daylighting section 11 with respect to the horizontal direction.

[Math. 3]

$$\Delta L \geqq T \cdot \tan \theta \qquad \cdots \text{ Ex. 3}$$

The daylighting areas SA and the light-transmitting areas TA in the present embodiment are arranged one above each other to extend in the horizontal direction. The light-diffusion areas KA, overlapping the daylighting areas SA in plan view, extend in the horizontal direction similarly to the daylighting areas SA, but stretch downward beyond the bottom of the daylighting areas SA. The daylighting areas SA and the light-transmitting areas TA may be arranged in various manners as shown in the variation examples of the first embodiment (see FIGs. 13 to 20). In each of these variation examples, the light-diffusion areas KA preferably overlap the daylighting areas SA in plan view and stretch downward beyond the bottom of the daylighting areas SA. Furthermore, if, for example, the light-transmitting areas TA and the daylighting areas SA are disposed side by side (the light-transmitting areas TA are disposed to the right and left of the daylighting areas SA) as described in Variation Example 1 of the first embodiment (see FIG. 13), the light-diffusion areas KA preferably stretch to the left and right beyond the sides of the daylighting areas SA. To put it differently, the light-diffusion areas KA preferably completely cover, and stretch wider than, the daylighting areas SA when viewed normal to the base material 10. In this structure, the light having passed through the daylighting areas SA more certainly passes through the light-diffusion areas KA, which more reliably reduces glare.

Seventh Embodiment

Next will be described a daylighting device 601 in accordance with a seventh embodiment.

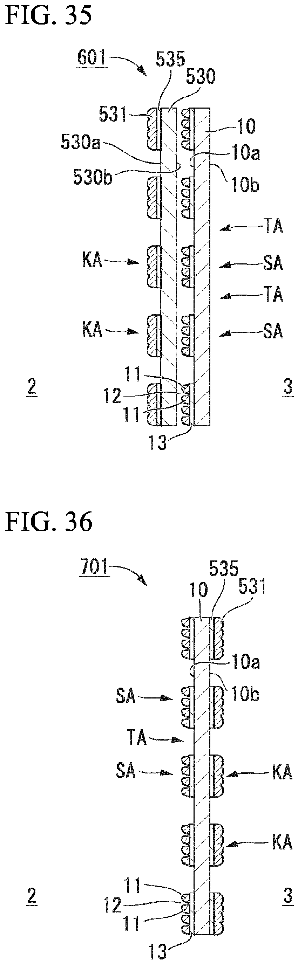

FIG. 35 is a vertical cross-sectional view of the daylighting device 601. The daylighting device 601 in accordance with the seventh embodiment differs from the daylighting device 501 in accordance with the sixth embodiment in the relative positions of the first base material 10 on which the daylighting sections 11 are provided and the second base material 530 on which the light-diffusion sections 531 are provided.

The daylighting device 601 includes a light-transmitting, platelike first base material (base material) 10, a plurality of daylighting sections 11, a support base material 13, a light-transmitting, second base material 530, a plurality of light-diffusion sections 531, and a support base material 535. The daylighting sections 11 are disposed on a first face 10a of the first base material 10. The support base material 13 is positioned between the first base material 10 and the daylighting sections 11. The second base material 530 is disposed facing the first face 10a of the first base material 10 so as to cover the daylighting sections 11. The light-diffusion sections 531 are disposed on a first face 530a of the second base material 530. The support base material 535 is positioned between the second base material 530 and the light-diffusion sections 531. Similarly to the first embodiment, the first face 10a of the base material 10 in the daylighting device 601 has a plurality of daylighting areas SA (four daylighting areas SA in the present embodiment) and a plurality of light-transmitting areas TA (three light-transmitting areas TA in the present embodiment) arranged like alternating stripes thereon. Similarly to the previous embodiment, the light-diffusion sections 531 are disposed in such locations as to generally overlap the daylighting areas SA when viewed normal to the first base material 10, thereby forming the light-diffusion areas KA.

The first face 10a of the first base material 10 faces a second face 530b of the second base material 530 in the present embodiment.

In the daylighting device 601 in accordance with the present embodiment, incoming light from the exterior 2 passes through the light-diffusion areas KA before passing through the daylighting areas SA. In this structure, diffused light may be incident on the daylighting areas SA, which may reduce glaring light.

Eighth Embodiment

Next will be described a daylighting device 701 in accordance with an eighth embodiment.

FIG. 36 is a vertical cross-sectional view of the daylighting device 701. The daylighting device 701 in accordance with the eighth embodiment differs from the daylighting device 501 in accordance with the sixth embodiment in the location of the light-diffusion sections 531.

The daylighting device 701 includes a light-transmitting, platelike base material 10, a plurality of daylighting sections 11, a support base material 13, a plurality of light-diffusion sections 531, and a support base material 535. The daylighting sections 11 are disposed on a first face 10a of the base material 10. The support base material 13 is positioned between the base material 10 and the daylighting sections 11. The light-diffusion sections 531 are disposed on a second face 10b of the base material 10. The support base material 535 is positioned between the base material 10 and the light-diffusion sections 531. Similarly to the first embodiment, the first face 10a of the base material 10 in the daylighting device 701 has a plurality of daylighting areas SA (four daylighting areas SA in the present embodiment) and a plurality of light-transmitting areas TA (three light-transmitting areas TA in the present embodiment) arranged like alternating stripes thereon. Similarly to the previous embodiments, the light-diffusion sections 531 are disposed in such locations as to generally overlap the daylighting areas SA when viewed normal to the base material 10, thereby forming the light-diffusion areas KA.

In the daylighting device 701 in accordance with the present embodiment, the light coming from the exterior 2 and reflecting off the daylighting areas SA hits the light-diffusion areas KA, which may reduce glaring light.

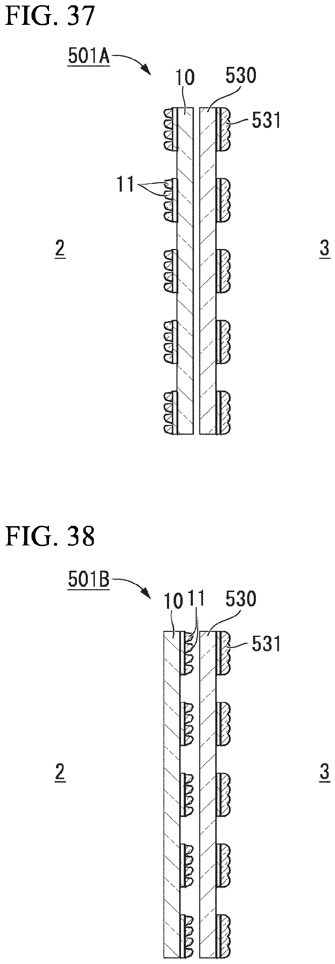

The sixth to eighth embodiments have so far described daylighting devices that include light-diffusion sections. The daylighting devices may include, as examples, the light-diffusion sections shown in FIGs. 37 to 42.

A daylighting device 501A in FIG. 37 includes a first base material 10 facing the exterior 2 and a second base material 530 facing the interior 3. The daylighting device 501A further includes daylighting sections 11 on the exterior 2 side of the first base material 10 and light-diffusion sections 531 on the interior 3 side of the second base material 530. The provision of the light-diffusion sections 531 on the interior 3 side of the daylighting device 501A may render reflection images of indoor lights less recognizable on the daylighting device 501A, which may in turn render distortion of the surface of the daylighting device 501A less prominent.

A daylighting device 501B in FIG. 38 includes a first base material 10 facing the exterior 2 and a second base material 530 facing the interior 3. The daylighting device 501B further includes daylighting sections 11 on the interior 3 side of the first base material 10 and light-diffusion sections 531 on the interior 3 side of the second base material 530. In this structure, the daylighting device 501B has a flat surface on the exterior 2 side thereof. Therefore, the daylighting device 501B may be attached directly onto the interior 3 side of a window pane.

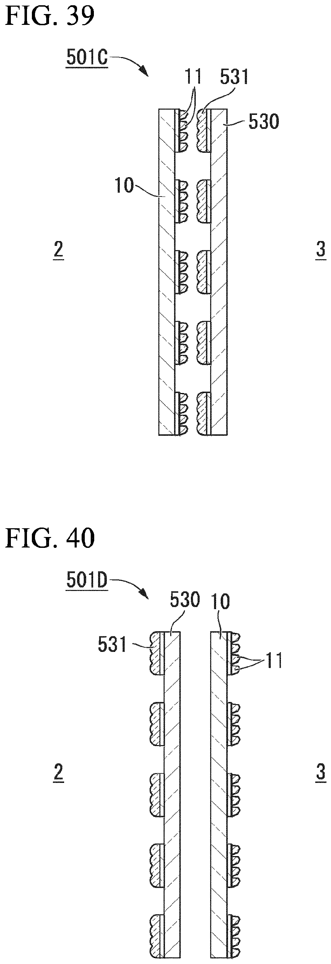

A daylighting device 501C in FIG. 39 includes a first base material 10 facing the exterior 2 and a second base material 530 facing the interior 3. The daylighting device 501C further includes daylighting sections 11 on the interior 3 side of the first base material 10 and light-diffusion sections 531 on the exterior 2 side of the second base material 530. In other words, the daylighting sections 11 and the light-diffusion sections 531 face each other. The provision of the daylighting sections 11 and the light-diffusion sections 531 between the first base material 10 and the second base material 530 prevents exposure of, and hence protects, the daylighting sections 11 and the light-diffusion sections 531. In addition, in this structure, the daylighting device 501C has a flat surface on the exterior 2 side thereof. Therefore, the daylighting device 501C may be attached directly onto the interior 3 side of a window pane.

A daylighting device 501D in FIG. 40 includes a first base material 10 facing the interior 3 and a second base material 530 facing the exterior 2. The daylighting device 501D further includes daylighting sections 11 on the interior 3 side of the first base material 10 and light-diffusion sections 531 on the exterior 2 side of the second base material 530. In this structure, the light-diffusion sections 531 diffuse the light traveling from the interior 3 to the exterior 2 through the daylighting device 501D, which in turn achieves the advantage of reduced light pollution.

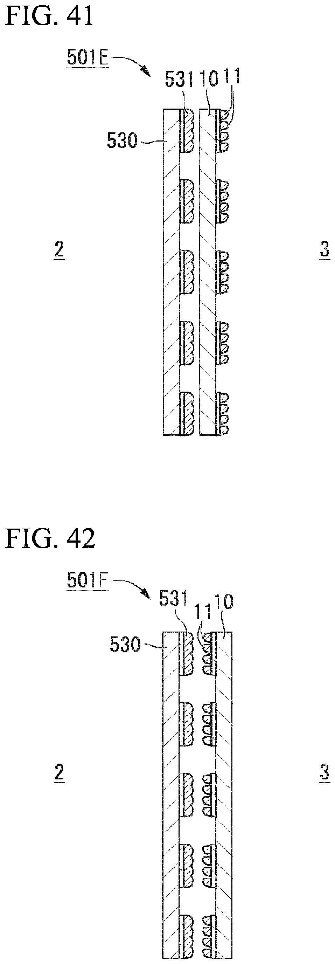

A daylighting device 501E in FIG. 41 includes a first base material 10 facing the interior 3 and a second base material 530 facing the exterior 2. The daylighting device 501E further includes daylighting sections 11 on the interior 3 side of the first base material 10 and light-diffusion sections 531 on the interior 3 side of the second base material 530. In this structure, the daylighting device 501E has a flat surface on the exterior 2 side thereof. Therefore, the daylighting device 501E may be attached directly onto the interior 3 side of a window pane. In addition, the light-diffusion sections 531 diffuse the light traveling from the interior 3 to the exterior 2 through the daylighting device 501E, which in turn achieves the advantage of reduced light pollution.

A daylighting device 501F in FIG. 42 includes a first base material 10 facing the interior 3 and a second base material 530 facing the exterior 2. The daylighting device 501F further includes daylighting sections 11 on the exterior 2 side of the first base material 10 and light-diffusion sections 531 on the interior 3 side of the second base material 530. In other words, the daylighting sections 11 and the light-diffusion sections 531 face each other. The provision of the daylighting sections 11 and the light-diffusion sections 531 between the first base material 10 and the second base material 530 prevents exposure of, and hence protects, the daylighting sections 11 and the light-diffusion sections 531. In addition, in this structure, the daylighting device 501F has a flat surface on the exterior 2 side thereof. Therefore, the daylighting device 501F may be attached directly onto the interior 3 side of a window pane. Additionally, the light-diffusion sections 531 diffuse the light traveling from the interior 3 to the exterior 2 through the daylighting device 501F, which in turn achieves the advantage of reduced light pollution.

Ninth Embodiment

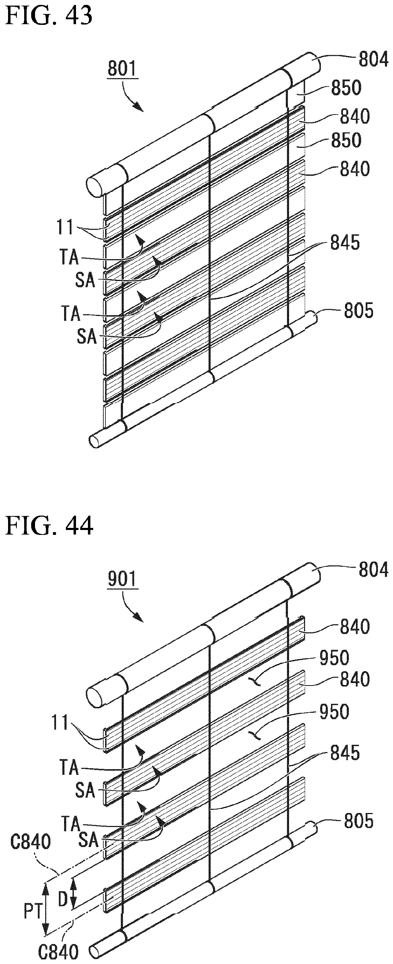

Next will be described a daylighting device 801 in accordance with a ninth embodiment. FIG. 43 is a perspective view illustrating an overall structure of the daylighting device 801. The daylighting device 801 is structured like a rattan blind.

The daylighting device 801 includes a plurality of slats 840 and 850, binding members 845, an upper rail 804, and a lower rail 805. The slats 840 and 850 are shaped like narrow flat strips and disposed one above each other. The binding members 845 thread the slats 840 and 850 so as to maintain the slats 840 and 850 aligned in one direction. The upper rail 804 sits atop the parallel slats 840 and 850. The lower rail 805 provides a bottom for the slats 840 and 850.

The daylighting device 801 may be a fixed type of rattan blind used as it is being suspended over a fixed window and may be a roller type of rattan blind that can be rolled up from the lower rail 805.

Each slat is either a daylighting slat 840 or a transparent slat 850.

The daylighting slats 840 have the same basic structure as the daylighting device 1 in accordance with the first embodiment. Specifically, each daylighting slat 840 includes a light-transmitting base material 10, daylighting sections 11 disposed on a first face 10a of the base material 10, and gap portions 12 provided between the daylighting sections 11.

The transparent slats 850 differ from the daylighting slats 840 in that the former transmit light and have no daylighting sections disposed thereon.

The daylighting slats 840 and the transparent slats 850 are arranged such that a single daylighting slat 840 and a single transparent slat 850 alternate in the vertical direction, and are suspended so as to have their length in the horizontal direction. The daylighting device 801 has daylighting areas SA constituted by the daylighting slats 840 and light-transmitting areas TA constituted by the transparent slats 850 in plan view. In other words, the daylighting areas SA and the light-transmitting areas TA are arranged in a vertically alternating fashion like narrow horizontal strips in plan view.

The daylighting device 801 in accordance with the present embodiment, in which the daylighting areas SA and the light-transmitting areas TA are arranged in a vertically alternating fashion, may enable the person in the room to see the scenery in the exterior 2 through the gaps between the daylighting areas SA. In other words, according to the present embodiment, the resultant daylighting device 801 may guarantee see-through visibility where the outside scenery can be seen through the window.

The present embodiment has so far described an example where the daylighting slats 840 and the transparent slats 850 are arranged such that a single daylighting slat 840 and a single transparent slat 850 alternate in the vertical direction. Alternatively, the daylighting slats 840 and the transparent slats 850 may be arranged such that a group of two or more daylighting slats 840 and a group of two or more transparent slats 850 alternate in the vertical direction.

Tenth Embodiment

Next will be described a daylighting device 901 in accordance with a tenth embodiment. FIG. 44 is a perspective view illustrating an overall structure of the daylighting device 901. The daylighting device 901 is structured like a rattan blind and differs from the daylighting device 801 in accordance with the ninth embodiment in that the former includes no transparent slats 850.

The daylighting device 901 includes strip-shaped daylighting slats 840 suspended one above each other so as to have their length in the horizontal direction. Take, as shown in FIG. 44, centerlines C840 passing through the heightwise centers of the daylighting slats 840. The distance that separates the centerlines C840 of two vertically adjacent daylighting slats 840 is equal to a vertical pitch PT of the daylighting slats 840. The pitch PT of the daylighting slats 840 is set to be greater than the vertical width D of the daylighting slats 840. This structure leaves gaps 950 between the daylighting slats 840, rendering the outdoor scenery visible through the daylighting device 901, even when the daylighting slats 840 are tilted.

The daylighting device 901 has daylighting areas SA constituted by the daylighting slats 840 and light-transmitting areas TA constituted by the gaps 950 in plan view. In other words, the daylighting areas SA and the light-transmitting areas TA are arranged in a vertically alternating fashion like narrow horizontal strips in plan view.

The daylighting device 901 in accordance with the present embodiment may achieve the same advantages as the ninth embodiment.

Eleventh Embodiment

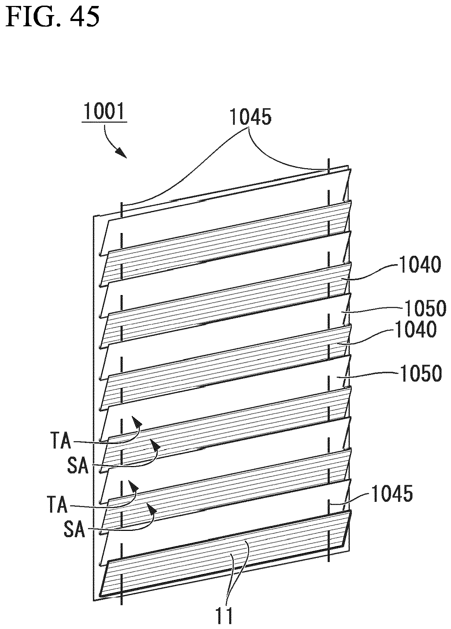

Next will be described a daylighting device 1001 in accordance with an eleventh embodiment. FIG. 45 is a perspective view illustrating an overall structure of the daylighting device 1001. The daylighting device 1001 is structured like a horizontal window blind and differs from the daylighting device 901 in accordance with the ninth embodiment, which is structured like a rattan blind, in that the tilting angle of the slats is adjustable.

The daylighting device 1001 includes a plurality of slats 1040 and 1050 and binding members 1045. The slats 1040 and 1050 are shaped like narrow flat strips and disposed one above each other. The binding members 1045 thread the slats 1040 and 1050 so as to maintain the slats 1040 and 1050 aligned in one direction. The binding members 1045 are connected to a tilt mechanism (not shown) to tilt the slats 1040 and 1050.

The daylighting slats 1040 have the same basic structure as the daylighting device 1 in accordance with the first embodiment. Specifically, each daylighting slat 1040 includes a light-transmitting base material 10, daylighting sections 11 disposed on a first face 10a of the base material 10, and gap portions 12 provided between the daylighting sections 11.

The transparent slats 1050 differ from the daylighting slats 1040 in that the former transmit light and have no daylighting sections disposed thereon.

The daylighting slats 1040 and the transparent slats 1050 are arranged such that a single daylighting slat 1040 and a single transparent slat 1050 alternate in the vertical direction, and are supported so as to have their length in the horizontal direction. The daylighting device 1001 has daylighting areas SA constituted by the daylighting slats 1040 and light-transmitting areas TA constituted by the transparent slats 1050 in plan view. In other words, the daylighting areas SA and the light-transmitting areas TA are arranged in a vertically alternating fashion like horizontally extending narrow strips in plan view.

The daylighting device 1001 in accordance with the present embodiment, in which the daylighting areas SA and the light-transmitting areas TA are arranged in a vertically alternating fashion, may enable the person in the room to see the scenery in the exterior 2 through the gaps between the daylighting areas SA. In other words, according to the present embodiment, the resultant daylighting device 1001 may guarantee see-through visibility where the outside scenery can be seen through the window.

The daylighting device 1001 in accordance with the present embodiment also allows for tilting of the slats 1040 and 1050, which may readily enlarge the light-transmitting areas TA for improved see-through visibility.

The present embodiment has so far described an example where the daylighting slats 1040 and the transparent slats 1050 are arranged such that a single daylighting slat 1040 and a single transparent slat 1050 alternate in the vertical direction. Alternatively, the daylighting slats 1040 and the transparent slats 1050 may be arranged such that a group of two or more daylighting slats 1040 and a group of two or more transparent slats 1050 alternate in the vertical direction. The transparent slats 1050 may be removed from the daylighting device 1001 to provide gaps that serve as the light-transmitting areas TA. In such a case, the vertical pitch of the daylighting slats 1040 is preferably greater than the vertical width of the daylighting slats 1040. This structure may provide, as the light-transmitting areas TA, gaps between vertically adjacent daylighting slats 1040, no matter how the daylighting slats 1040 are tilted by the tilt mechanism (not shown).

Twelfth Embodiment

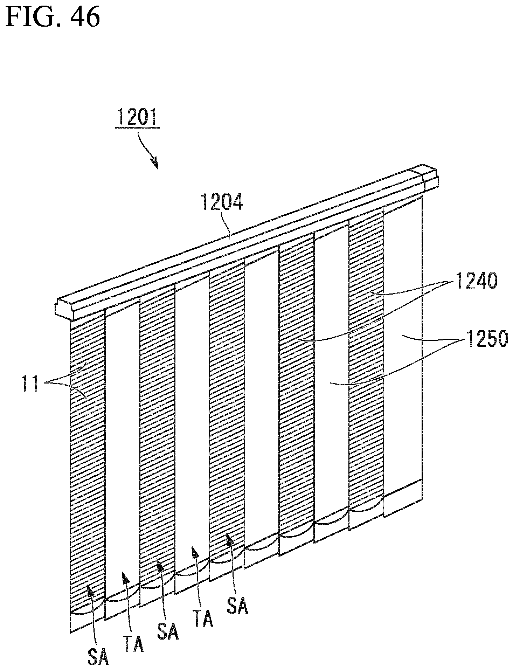

Next will be described a daylighting device 1201 in accordance with a twelfth embodiment. FIG. 46 is a perspective view illustrating an overall structure of the daylighting device 1201. The daylighting device 1201 is structured like a vertical window blind and differs from the daylighting device 1001 in accordance with the eleventh embodiment, which is structured like a horizontal window blind, in that the slats are suspended vertically.

The daylighting device 1201 includes a rail unit 1204 and a plurality of slats 1240 and 1250. The rail unit 1204 is to be disposed atop a window so as to extend in the horizontal direction. The slats 1240 and 1250 are shaped like narrow flat strips and suspended side by side from the rail unit 1204. The rail unit 1204 includes a tilt mechanism (not shown) therein to tilt the slats 1240 and 1250.

The daylighting slats 1240 have the same basic structure as the daylighting device 1 in accordance with the first embodiment. Specifically, each daylighting slat 1240 includes a light-transmitting base material 10, daylighting sections 11 disposed on a first face 10a of the base material 10, and gap portions 12 provided between the daylighting sections 11.

The transparent slats 1250 differ from the daylighting slats 1240 in that the former transmit light and have no daylighting sections disposed thereon.

The daylighting slats 1240 and the transparent slats 1250 are arranged such that a single daylighting slat 1240 and a single transparent slat 1250 alternate in the horizontal direction, and are suspended so as to have their lengths in the vertical direction. The daylighting device 1201 has daylighting areas SA constituted by the daylighting slats 1240 and light-transmitting areas TA constituted by the transparent slats 1250 in plan view. In other words, the daylighting areas SA and the light-transmitting areas TA are arranged in a horizontally alternating fashion like vertically extending narrow strips in plan view.

The daylighting device 1201 in accordance with the present embodiment, in which the daylighting areas SA and the light-transmitting areas TA are arranged in a horizontally alternating fashion, may enable the person in the room to see the scenery in the exterior 2 through the gaps between the daylighting areas SA. In other words, according to the present embodiment, the resultant daylighting device 1201 may guarantee see-through visibility where the outside scenery can be seen through the window.

The present embodiment has so far described an example where the daylighting slats 1240 and the transparent slats 1250 are arranged such that a single daylighting slat 1240 and a single transparent slat 1250 alternate in the vertical direction. Alternatively, the daylighting slats 1240 and the transparent slats 1250 may be arranged such that a group of two or more daylighting slats 1240 and a group of two or more transparent slats 1250 alternate in the vertical direction. The transparent slats 1250 may be removed from the daylighting device 1201 to provide gaps that serve as the light-transmitting areas TA. In such a case, the vertical pitch of the daylighting slats 1240 is preferably greater than the vertical width of the daylighting slats 1240. This structure may provide, as the light-transmitting areas TA, gaps between vertically adjacent daylighting slats 1240, no matter how the daylighting slats 1240 are tilted by the tilt mechanism (not shown).

The daylighting slats 840, 1040, and 1240 in the daylighting devices 801, 901, 1001, and 1201 in accordance respectively with the ninth to twelfth embodiments may adopt the structure of the daylighting areas SA in accordance with other embodiments. For example, the daylighting slats 840, 1040, and 1240 may include a light-diffusion section (e.g., the light-diffusion section 531A, 531B, 531C, or 531D in FIGs. 29 to 33) on a face thereof opposite the face on which the daylighting sections 11 are provided. Either additionally or alternatively, the daylighting slats 840, 1040, and 1240 may, similarly to the daylighting device 401 in FIG. 26, include obliquely extending daylighting sections in vertically adjacent daylighting areas SA.

The daylighting devices 801, 901, 1001, and 1201 in accordance respectively with the ninth to twelfth embodiments have the daylighting areas SA and the light-transmitting areas TA arranged either in alternating vertical stripes or in alternating horizontal stripes across the daylighting devices 801, 901, 1001, and 1201. Alternatively, the daylighting areas SA and the light-transmitting areas TA may be arranged like alternating horizontal stripes only in a part of the daylighting devices 801, 901, 1001, and 1201, the remaining part including exclusively either the daylighting areas SA or the light-transmitting areas TA. As another alternative, the remaining part may include slats arranged in such a manner as to completely block light transmission.

The daylighting devices 801, 901, 1001, and 1201 in accordance respectively with the ninth to twelfth embodiments may include an electric motor for winding up the slits for storage purposes. Meanwhile, the daylighting devices 1001 and 1201 in accordance respectively with the eleventh and twelfth embodiments may include an electric motor in the slit-tilting mechanism. When this is actually the case, the slits may be wound up, stored, or tilted electrically. Either additionally or alternatively, these daylighting devices 801, 901, 1001, and 1201 may be configured to allow for remote control of the winding, storing, or tilting action through a switch and/or a remote controller.

Thirteenth Embodiment

Next will be described a daylighting device 1101 in accordance with a thirteenth embodiment.

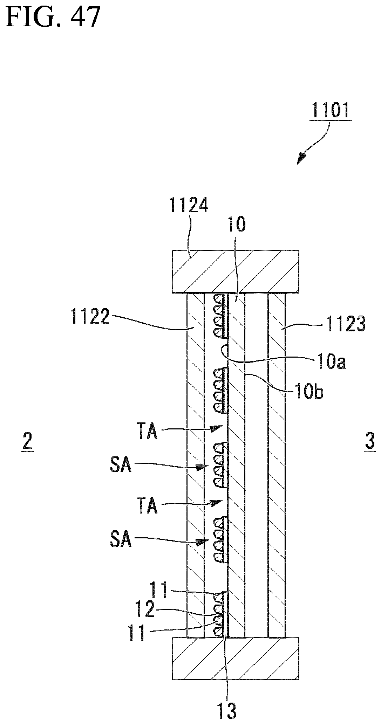

FIG. 47 is a vertical cross-sectional view of the daylighting device 1101. The daylighting device 1101 differs from the daylighting device 1 in accordance with the first embodiment primarily in that the former includes a pair of transparent plates 1122 and 1123. Members that are the same as those in a foregoing embodiment are indicated by the same reference signs or numerals, and description thereof is omitted.

The daylighting device 1101 includes a light-transmitting, platelike base material 10, a plurality of daylighting sections 11, a support base material 13, the transparent plates 1122 and 1123, and a frame body 1124. The daylighting sections 11 are disposed on a first face 10a of the base material 10. The support base material 13 is positioned between the base material 10 and the daylighting sections 11. The transparent plates 1122 and 1123 transmit light and are disposed facing the first face 10a and a second face 10b of the base material 10 respectively. The frame body 1124 surrounds the base material 10 and the transparent plates 1122 and 1123 in plan view to hold them together.

The present embodiment may achieve the same advantages as the first embodiment.

The present embodiment may additionally protect the day lighting sections 11 since the base material 10 on which the daylighting sections 11 are disposed is positioned between the transparent plates 1122 and 1123. This structure may prevent scratches on the daylighting sections 11. Additionally, the structure may seal out the space containing the daylighting sections 11, thereby restraining the daylighting sections 11 from coming into contact with air and hence the resin material for the daylighting sections 11 from degrading.

A daylighting device of another embodiment may be disposed between the transparent plates 1122 and 1123 of the present embodiment. A daylighting device that includes any light-diffusion sections in FIGs. 28 and 35 to 42 may be disposed between the transparent plates 1122 and 1123, for example.

Daylighting System

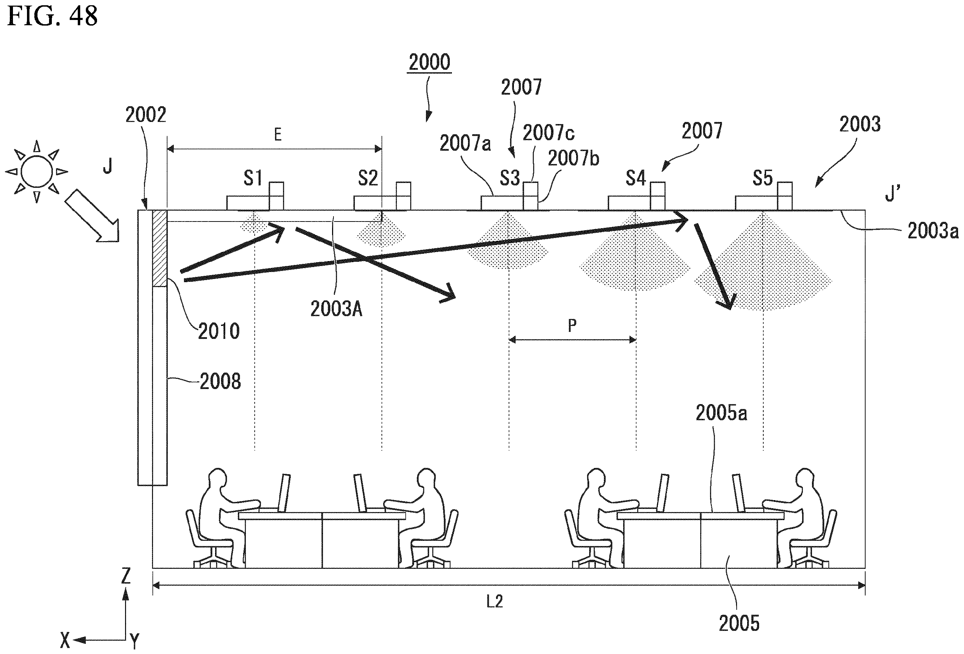

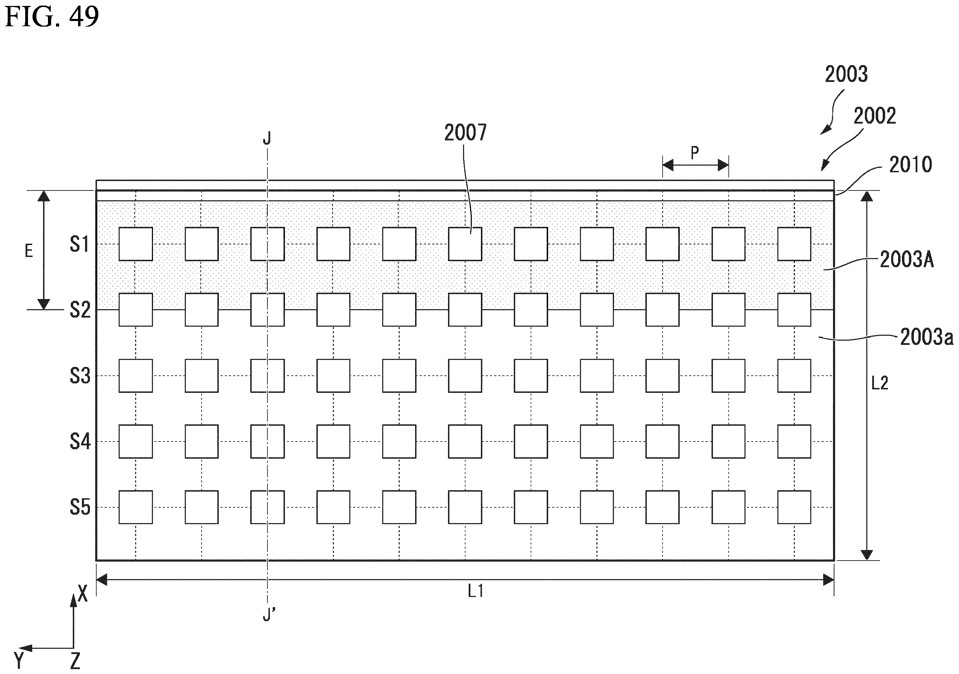

FIG. 48 is a cross-sectional view, taken along line J-J' in FIG. 49, of a room model in which a daylighting device and a daylighting system are installed. FIG. 49 is a plan view of a ceiling of a room model 2000.

In the room model 2000, a room 2003 into which outdoor light is guided has a ceiling 2003a constituted partly by a ceiling material that may have strong light-reflecting properties. Referring to FIGs. 48 and 49, the ceiling 2003a of the room 2003 is provided with a light-reflecting ceiling material 2003A as a ceiling material having such light-reflecting properties. The light-reflecting ceiling material 2003A is for facilitating the guiding of outdoor light from a daylighting device 2010 installed over a window 2002 deep into the interior. The light-reflecting ceiling material 2003A is disposed on a part of the ceiling 2003a close to the window, specifically, on predetermined part E of the ceiling 2003a (approximately up to 3 meters from the window 2002).

The light-reflecting ceiling material 2003A, as described above, serves to efficiently direct deep into the interior the outdoor light guided indoors through the window 2002 on which the daylighting device 2010 (any of the daylighting devices of the abovementioned embodiments) is installed. The outdoor light guided in the direction of the indoor ceiling 2003a by the daylighting device 2010 is reflected by the light-reflecting ceiling material 2003A, hence changing direction and illuminating a desk top face 2005a of a desk 2005 located deep in the interior. Thus, the light-reflecting ceiling material 2003A has the advantage of lighting up the desk top face 2005a.

The light-reflecting ceiling material 2003A may be either diffuse reflective or specular reflective. Preferably, the light-reflecting ceiling material 2003A has a suitable mix of these properties to achieve both the advantage of lighting up the desk top face 2005a of the desk 2005 located deep in the interior and the advantage of reducing glare which is uncomfortable to the occupant.

Much of the light guided indoors by the daylighting device 2010 travels in the direction of the part of the ceiling that is close to the window 2002. Still, the part of the interior close to the window 2002 often has sufficient lighting. Therefore, the light that strikes the ceiling near the window (part E) can be partially diverted to a deep part of the interior where lighting is poor compared to the part near the window, by additionally using the light-reflecting ceiling material 2003A described here.

The light-reflecting ceiling material 2003A may be manufactured, for example, by embossing convexities and concavities each of approximately a few tens of micrometers on an aluminum or similar metal plate or by vapor-depositing a thin film of aluminum or a similar metal on the surface of a resin substrate having such convexities and concavities formed thereon. Alternatively, the embossed convexities and concavities may be formed from a curved surface with a higher cycle.

Furthermore, the embossed shape formed on the light-reflecting ceiling material 2003A may be changed as appropriate to control light distribution properties thereof and hence resultant indoor light distribution. For example, if stripes extending deep into the interior are embossed, the light reflected by the light-reflecting ceiling material 2003A is spread to the left and right of the window 2002 (in the directions that intersect the length of the convexities and concavities). When the window 2002 of the room 2003 is limited in size or orientation, these properties of the light-reflecting ceiling material 2003A may be exploited to diffuse light in the horizontal direction and at the same time to reflect the light deep into the room.

The daylighting device 2010 is used as a part of a daylighting system for the room 2003. The daylighting system includes, for example, the daylighting device 2010, a plurality of room lighting devices 2007, an insolation adjustment device 2008 installed over the window, a control system for these devices, the light-reflecting ceiling material 2003A installed on the ceiling 2003a, and every other structural members of the room.

The window 2002 of the room 2003 has the daylighting device 2010 installed over an upper portion thereof and the insolation adjustment device 2008 installed over a lower portion thereof. In this example, the insolation adjustment device 2008 is a window shade, which is by no means intended to limit the scope of the invention.

In the room 2003, the room lighting devices 2007 are arranged in a lattice in the left/right direction of the window 2002 and in the depth direction of the room. These room lighting devices 2007, in combination with the daylighting device 2010, constitute an illumination system for the whole room 2003.

Referring to FIGs. 48 and 49 illustrating the office ceiling 2003a, for example, the window 2002 has a length $L_1$ of 18 meters in the left/right direction, and the room 2003 has a length $L_2$ of 9 meters in the depth direction. The room lighting devices 2007 in this example are arranged in a lattice with pitches P each of 1.8 meters in the length and depth of the ceiling 2003a. More specifically, a total of 50 room lighting devices 2007 is arranged in a lattice of 10 rows and 5 columns.

Each room lighting device 2007 includes an interior lighting fixture 2007a, a brightness detection unit 2007b, and a control unit 2007c. The brightness detection unit 2007b and the control unit 2007c are integrated into the interior lighting fixture 2007a to form a single structural unit.

Each room lighting device 2007 may include two or more interior lighting fixtures 2007a and two or more brightness detection units 2007b, with one brightness detection unit 2007b for each interior lighting fixture 2007a. The brightness detection unit 2007b receives reflection off the face illuminated by the interior lighting fixture 2007a to detect illuminance on that face. In this example, the brightness detection unit 2007b detects illuminance on the desk top face 2005a of the desk 2005 located indoors.

The control units 2007c, each for a different one of the room lighting devices 2007, are connected to each other. In each room lighting device 2007, the control unit 2007c, connected to the other control units 2007c, performs feedback control to adjust the light output of an LED lamp in the interior lighting fixture 2007a such that the illuminance on the desk top face 2005a detected by the brightness detection unit 2007b is equal to a predetermined target illuminance $L_0$ (e.g., average illuminance: 750 lx).

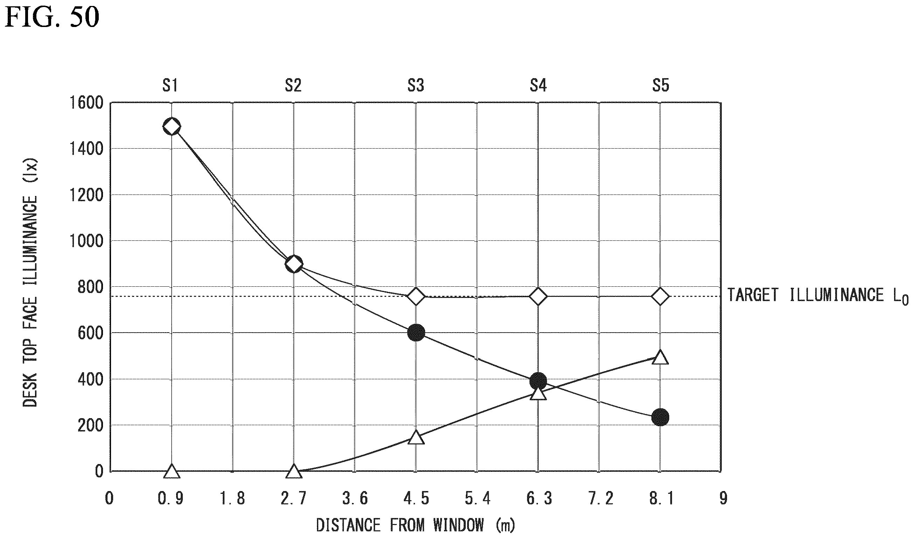

FIG. 50 is a graph representing a relationship between the illuminance produced by the daylighting light (natural light) guided into the interior by the daylighting device and the illuminance produced by the room lighting devices (daylighting system). In FIG. 50, the vertical axis indicates illuminance (lx) on the desk top face, and the horizontal axis indicates distance (meters) from the window. The broken line in the figure represents a target indoor illuminance. Each black circle denotes an illuminance produced by the daylighting device, each white triangle denotes an illuminance produced by the room lighting devices, and each white diamond denotes a total illuminance.

Referring to FIG. 50, the desk top face illuminance attributable to the daylighting light guided by the daylighting device 2010 is highest at the window, and the daylighting light's effect decreases with increasing distance from the window. This illuminance distribution in the depth direction of the room is caused during the daytime by natural daylight coming through a window into the room in which the daylighting device 2010 is installed. Accordingly, the daylighting device 2010 is used in combination with the room lighting devices 2007 which enhance the indoor illuminance distribution. The room lighting devices 2007, disposed on the indoor ceiling, detect an average illuminance below them by means of the brightness detection units 2007b and light up in a modulated manner such that the desk top face illuminances across the whole room are equal to the predetermined target illuminance L0. Therefore, columns S1 and S2 are near the window and only dimly light up, whereas columns S3, S4, and S5 light up so as to produce output that increases with increasing depth into the room. Consequently, the desk top faces across the whole room are lit up by the sum of the illumination by natural daylight and the illumination by the room lighting devices 2007 at a desk top face illuminance of 750 lx, which is regarded as being sufficient for desk work (see, JIS Z9110, General Rules of Recommended Lighting Levels, Recommended Illuminance in Offices).

As described above, light can be delivered deep into the interior by using both the daylighting device 2010 and the daylighting system (room lighting devices 2007) together. This can in turn further improve indoor brightness and ensure a sufficient desk top face illuminance for desk work across the whole room, hence providing a more stable, brightly lit environment independently from the season and the weather.

Preferred embodiments of the present invention have been so far described in reference to the attached drawings. The present invention is by no means limited to the embodiments and examples described above. The person skilled in the art could obviously conceive variations and modifications within the scope of the claims. These variations and modifications are encompassed in the technical scope of the claims. The technical features disclosed in the embodiments may be combined where appropriate.

For example, in each embodiment described above, the daylighting sections 11 are disposed on the first face 10a which is located on the exterior 2 side of the base material 10. Alternatively, the daylighting sections 11 may be disposed on the interior 3 side of the base material 10. With this alternative structure, the embodiments may still achieve the same advantages.

Industrial Applicability

The present invention, in some aspects thereof, is applicable to daylighting devices in which the outside scenery should be visible, daylighting systems, and methods of manufacturing such daylighting devices.

Reference Signs List

1, 1A, 1B, 1C, 1D, 1E, 1F, 1G, 101, 201, 301, 301A, 401, 501, 601, 701, 801, 901, 1001, 1101, 2010: Daylighting Device

9, 85: Mold

9a: Daylighting-structure-forming Section (Irregular Region)

9b: Light-transmitting-area-forming Section (Flat Region)

10, 20, 310, 310A: Base Material

10: First Base Material (Base Material)

10a, 310a, 530a: First Face

11, 411: Daylighting Section

12: Gap Portion

71: Resin Sheet (Daylighting Film)

222: Protection Plate

531: Light-diffusion Section

840, 1040: Daylighting Slat

850, 1050: Transparent Slat

1122, 1123: Transparent Plate

KA: Light-diffusion Area

SA: Daylighting Area

TA: Light-transmitting Area

**Claims**

1. A daylighting device comprising:

    a transparent base material;
    a plurality of daylighting sections disposed on a first face of the base material; and
    gap portions provided between the daylighting sections,
    wherein:

        the daylighting device has daylighting areas in which light is transmitted through the daylighting sections and light-transmitting areas in which light is transmitted through the base material without passing through the daylighting sections; and
        the daylighting areas and the light-transmitting areas are arranged so as to alternate in at least one direction in a plane of the first face.

2. The daylighting device according to claim 1, wherein the daylighting areas and the light-transmitting areas are arranged like alternating stripes when viewed normal to the base material.

3. The daylighting device according to claim 1, wherein the daylighting areas and the light-transmitting areas are arranged in a checkerboard pattern when viewed normal to the base material.

4. The daylighting device according to claim 1, wherein the daylighting areas and the light-transmitting areas are arranged in a non-periodic fashion in a single direction in the plane of the first face when viewed normal to the base material.

5. The daylighting device according to any one of claims 1 to 4, wherein the light-transmitting areas have a lower light transmittance than do the daylighting areas.

6. The daylighting device according to any one of claims 1 to 5, further comprising a transparent protection plate disposed on the first face of the base material, wherein the protection plate is fixed to the base material in the light-transmitting areas.

7. The daylighting device according to any one of claims 1 to 6, wherein the base material has a smaller total thickness in portions thereof where the light-transmitting areas are formed than in portions thereof where the daylighting areas are formed.

8. The daylighting device according to any one of claims 1 to 7, wherein:

those daylighting sections in a first one of the daylighting areas extend linearly in a first direction in the plane of the first face; and

those daylighting sections in a second one of the daylighting areas extend linearly in a second direction in the plane of the first face, the second daylighting area being a different daylighting area from the first daylighting area, the second direction being different from the first direction.

9. The daylighting device according to any one of claims 1 to 8, further comprising a light-diffusion section configured to diffuse either light exiting the daylighting sections or light entering the daylighting sections.

10. The daylighting device according to claim 9, wherein:

the light-diffusion section forms a light-diffusion area; and

the light-diffusion area includes the daylighting areas and is larger than the daylighting areas when viewed normal to the base material.

11. The daylighting device according to any one of claims 1 to 10, further comprising a pair of transparent plates, wherein the base material is disposed between the pair of transparent plates.

12. A daylighting device comprising:

a plurality of strip-shaped daylighting slats each comprising a transparent base material, a plurality of daylighting sections disposed on a first face of the base material, and gap portions provided between the daylighting sections; and

a plurality of light-transmitting, strip-shaped transparent slats,

wherein the daylighting slats and the transparent slats are suspended such that a group of at least one of the daylighting slats and a group of at least one of the transparent slats alternate vertically and that the daylighting slats and the transparent slats each have a length thereof in a horizontal direction.

13. A daylighting device comprising a plurality of strip-shaped daylighting slats each comprising: a transparent base material; a plurality of daylighting sections disposed on a first face of the base material; and gap portions provided between the daylighting sections,

wherein the daylighting slats are suspended one above each other at a vertical pitch greater than a vertical width of the daylighting slats, so as to each have a length thereof in a horizontal direction.

14. A daylighting system comprising:

the daylighting device according to any one of claims 1 to 13;

an interior lighting fixture;

a detection unit configured to detect indoor brightness; and

a control unit configured to control the interior lighting fixture and the detection unit.

15. A method of manufacturing a daylighting device, the method comprising:

providing a plurality of daylighting sections and gap portions on a first face of a light-transmitting plate material, the gap portions being located between the daylighting sections; and

filling some of the gap portions with a resin material to form light-transmitting areas,

wherein the light-transmitting areas and daylighting areas constituted by the daylighting sections, not filled with the resin material, are arranged so as to alternate in at least one direction in a plane of the first face.

16. A method of manufacturing a daylighting device, the method comprising:

forming a daylighting film including a plurality of daylighting sections and gap portions between the daylighting sections; and

attaching the daylighting film to a first face of a transparent base material,

wherein:

the first face has daylighting areas where the daylighting film is attached and light-transmitting areas where the daylighting film is not attached; and

the daylighting areas and the light-transmitting areas are arranged so as to alternate in at least one direction in a plane of the first face.

17. A method of manufacturing a daylighting device, the method comprising forming daylighting areas and light-transmitting areas on a base material made of a transparent plate material using a mold having irregular regions and flat regions, the daylighting areas corresponding to the irregular regions, the light-transmitting areas corresponding to the flat regions, wherein the daylighting areas and the light-transmitting areas are arranged so as to alternate in at least one direction in a plane of a first face of the base material.

FIG. 1

## FIG. 2A

## FIG. 2B

FIG. 3

FIG. 4

FIG. 5A

10

11a

FIG. 5B

10

11b

FIG. 5C

10

11c

FIG. 5D

10

11d

11e

FIG. 6A

FIG. 6B

FIG. 7

## FIG. 8A

85

85a

84

13

13a

## FIG. 8B

85

13

## FIG. 8C

71

11

13

# FIG. 9A

# FIG. 9B

# FIG. 9C

FIG. 10A

FIG. 10B

FIG. 10C

## FIG. 11A

## FIG. 11B

## FIG. 11C

## FIG. 12A

## FIG. 12B

## FIG. 12C

FIG. 13

FIG. 14

## FIG. 15

## FIG. 16

FIG. 17

FIG. 18

## FIG. 19

## FIG. 20

## FIG. 21

101

10b
10a
10
2
L2
L2a
3
SA
TA
SA
L1
TA
L2b
121
11
12
11
13

## FIG. 22

201
222
10b
10
SA
223a
10a
223
TA
224
224a
224
2
225
3
224
225
12
11
11
13

## FIG. 23

## FIG. 24

EP 3 379 303 A1

## FIG. 25

44

FIG. 26

## FIG. 27

## FIG. 28

## FIG. 29

## FIG. 30

FIG. 31

FIG. 32

FIG. 33

FIG. 34

## FIG. 35

## FIG. 36

FIG. 37

FIG. 38

FIG. 39

501C

11  531

530

10

2

3

FIG. 40

501D

530  10

531

11

2

3

## FIG. 41

## FIG. 42

## FIG. 43

## FIG. 44

FIG. 45

## FIG. 46

FIG. 47

FIG. 48

EP 3 379 303 A1

FIG. 49

FIG. 50

EP 3 379 303 A1

## INTERNATIONAL SEARCH REPORT

| | International application No. |
|---|---|
| | PCT/JP2016/083900 |

| A. CLASSIFICATION OF SUBJECT MATTER |
|---|
| G02B5/02(2006.01)i, E06B3/66(2006.01)i, E06B5/00(2006.01)i, E06B9/26 (2006.01)i, F21S11/00(2006.01)i, G02B5/00(2006.01)i |

According to International Patent Classification (IPC) or to both national classification and IPC

| B. FIELDS SEARCHED |
|---|
| Minimum documentation searched (classification system followed by classification symbols) |
| G02B5/00-5/136, E06B3/66, E06B5/00, E06B9/26, F21S11/00 |

Documentation searched other than minimum documentation to the extent that such documents are included in the fields searched

| Jitsuyo Shinan Koho | 1922-1996 | Jitsuyo Shinan Toroku Koho | 1996-2017 |
|---|---|---|---|
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2015/098940 A1 (Sharp Corp.),<br>02 July 2015 (02.07.2015),<br>paragraphs [0093] to [0109], [0123] to [0125],<br>[0128], [0136] to [0151]; fig. 28A, 33, 35<br>(Family: none) | 1-2,5-6,9-14<br>3-4,8,16-17<br>7,15 |
| Y | JP 2014-515123 A (3M Innovative Properties Co.),<br>26 June 2014 (26.06.2014),<br>paragraphs [0101] to [0102]<br>& WO 2012/134787 A2<br>page 30, line 30 to page 31, line 8<br>& US 2014/0104689 A1 & TW 201250149 A<br>& CA 2831389 A1 & CN 103460082 A<br>& KR 10-2014-0017632 A | 3-4,8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 February 2017 (06.02.17) | 14 February 2017 (14.02.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

| International application No. |
| --- |
| PCT/JP2016/083900 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | WO 2014/196596 A1 (Sharp Corp.), 11 December 2014 (11.12.2014), paragraphs [0179] to [0185]; fig. 28 & US 2016/0223154 A1 paragraphs [0257] to [0265]; fig. 28 & CN 105308483 A | 8 |
| Y | WO 2015/072420 A1 (Sharp Corp.), 21 May 2015 (21.05.2015), paragraphs [0127] to [0133], [0152] to [0157]; fig. 35A to 36A, 40 to 42B & US 2016/0273724 A1 paragraphs [0251] to [0258], [0283] to [0293]; fig. 35A to 36A, 40 to 42B | 16-17 |
| A | JP 63-38516 B2 (Takashi MORI), 01 August 1988 (01.08.1988), entire text; fig. 1 to 3 (Family: none) | 1-17 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015225170 A

- JP 2013156554 A